# EUROPÄISCHE PATENTSCHRIFT

(11) **EP 0 927 090 B1**
(45) Veröffentlichungstag und Bekanntmachung des Hinweises auf die Patenterteilung: **11.06.2003**
(21) Anmeldenummer: 96946177.1
(22) Anmeldetag: 09.12.1996
(51) Int. Cl.: B23K 26/00, G02B 6/44

(54) **VORRICHTUNG SOWIE VERFAHREN ZUR HERSTELLUNG EINES METALLISCHEN RÖHRCHENS FÜR LICHTWELLENLEITER**
DEVICE AND PROCESS FOR PRODUCING A METALLIC SHEATH FOR OPTICAL FIBERS
DISPOSITIF ET PROCEDE DE PRODUCTION D'UNE GAINE METALLIQUE POUR FIBRES OPTIQUES

(30) Priorität: 19.09.1996 DE 19638403
(43) Veröffentlichungstag der Anmeldung: 07.07.1999
(60) Teilanmeldung: 02023158.5
(73) Patentinhaber: SIEMENS AKTIENGESELLSCHAFT, 80333 München (DE)
(72) Erfinder: WICHMANN, Franz-Josef, D-26169 Friesoythe (DE)
(74) Vertreter: Epping, Wilhelm, Dipl.-Ing.
(86) Internationale Anmeldenummer: DE9602359
(87) Internationale Veröffentlichungsnummer: WO98012013

(56) Entgegenhaltungen:
- EP-A- 0 708 348
- EP-A- 0 727 273
- EP-A- 0 727 274
- EP-A- 0 727 679
- DE-A- 4 003 311
- DE-A- 4 210 633
- DE-A- 4 328 780
- US-A- 4 811 888

## Beschreibung

Die Erfindung betrifft ein Verfahren zur Herstellung eines mit mindestens einem bestücktes, metallisches Röhrchen

In der Kabeltechnik werden zum Beispiel für Hochspannungs-Freileitungsseile oder Seekabel optische Übertragungselemente verwendet, deren Lichtwellenleiter von einer metallischen Ummantelung umgeben sind. Gegebenenfalls können die Lichtwellenleiter zusätzlich in eine Füllmasse im Inneren der metallischen Ummantelung eingebettet sein. Die metallische Ummantelung dient dabei insbesondere dem Zweck, die Lichtwellenleiter vor chemischen, mechanischen Beanspruchungen und/oder sonstigen störenden Einflüssen, wie zum Beispiel Umgebungsfeuchtigkeit oder Wasserstoffdiffusion zu schützen. Zur Herstellung eines solchen optischen Übertragungselementes wird ein Metallband zu einem Röhrchen geformt, mindestens ein Lichtwellenleiter und/oder Füllmasse dorthinein eingebracht und das Röhrchen verschweißt.

Die Herstellung eines solchen Lichtwellenleiter- bestückten metallischen Röhrchens kann in der Praxis aus vielfältigen Gründen erschwert sein.

So können sich in der Praxis beispielsweise Schwierigkeiten insbesondere beim Verschweißen des metallischen Röhrchens ergeben. Es besteht so zum Beispiel die Gefahr, daß es zu einer unzulässig hohen thermischen Belastung und damit einer Materialschädigung oder gar einem teilweisen Verbrennen der Füllmasse und/oder der Kunststoffbeschichtung (= Coating) der Lichtwellenleiter kommt. Weiterhin ist insbesondere der Schweißprozeß auch deshalb kritisch, weil durch die örtliche Überhitzung Wasserstoff freigesetzt werden kann. Solcher Wasserstoff kann beispielsweise aus feuchter Umgebungsluft, beim Aufschmelzen des Metalls des Röhrchens, aus der Füllmasse, aus der Kunststoffbeschichtung (= Coating) der Lichtwellenleiter, usw. ... frei werden. Würde solcher Wasserstoff gegebenenfalls mit in das Innere des fertig verschweißten, rundum dichten Röhrchens eingeschleppt werden, so würde er dort verbleiben und zu einem unerwünschten Anstieg der Übertragungsdämpfung der Lichtwellenleiter führen.

In der DE 40 03 311 A1 wird ein Metallband bereits vor oder während seiner Formgebung zu einem Röhrchen reversibel gelängt. Dazu wird das Metallband noch vor seinem eigentlichen Formvorgang mit Hilfe einer Aufwärmvorrichtung aufgeheizt. Optische Fasern werden im Bereich des sich bildenden, gelängten Schlitz-Röhrchenabschnittes im Gleichlauf mit diesen in das Schlitz-Röhrchen eingeführt. Anschließend wird das vorab gelängte Schlitz- Röhrchen mechanisch geschlossen, mit Hilfe einer Schweißeinrichtung längsverschweißt und schließlich zur Querschnittsreduzierung durch einen nachfolgenden Ziehring hindurchgezogen. Ein nachgeordneter Spannbackenabzug dient dabei dem Vorwärtstransport des Röhrchens. Anschließend wird das Röhrchen zugentlastet einer Vorratstrommel zugeführt. Bei einem derartigen Verfahren können sich Probleme insbesondere dadurch ergeben, daß das Metallband bereits vor dem eigentlichen Formvorgang reversibel gelängt wird und dann erst noch mehrere Formgebungsstufen wie z.B. Rollenwerkzeuge, eine Schweißeinrichtung sowie einen Ziehring durchläuft, bis schließlich die Formgebung für das zu fertigende Röhrchen vollendet ist. Durch diese nachträglichen Formgebungsschritte besteht insbesondere die Gefahr, daß die vorab eingestellte Längung des Metallbandes in unkontrollierter Weise mit Störgrößen beaufschlagt oder teilweise bzw. gegebenenfalls sogar ganz wieder verloren geht. Eine exakte Einstellung der Überlänge der optischen Fasern gegenüber dem metallischen Röhrchen ist somit in der Praxis erschwert.

In EP 0 708 348 A1 ist eine Vorrichtung und ein entsprechendes Herstellungsverfahren zur Herstellung eines metallischen Röhrchens beschrieben, in das Lichtwellenleiter eingebracht werden. Hierbei wird ein von einer Formvorrichtung geformtes Metallband, das zu einem Röhrchen umgeformt wird, einer Schweißvorrichtung zugeführt, die die Bandkanten des Röhrchens miteinander verschweißt.

Ein Problem der Erfindung ist es, einen Weg aufzuzeigen, wie ein mit mindestens einem Lichtwellenleiter zu bestückendes metallisches Röhrchen einwandfrei hergestellt werden kann.

Diese Aufgabe wird mit einer Vorrichtung gemäß Patentanspruch 1 und mit einem Verfahren gemäß Patentanspruch 7 gelöst.

Dadurch ist es ermöglicht, das metallische Röhrchen in zuverlässiger Weise herzustellen.

Die Erfindung betrifft eine Vorrichtung zur Herstellung eines metallischen Röhrchens, in das mindestens ein Lichtwellenleiter einbringbar ist, unter Verwendung einer Formvorrichtung, die ein langgestrecktes Metallband zu dem Röhrchen umformt, sowie einer Schweißvorrichtung, die die beiden Bandkanten des Röhrchens im Schweißbereich miteinander verschweißt, welche dadurch gekennzeichnet ist, daß im Schweißbereich mindestens ein gekühlter Festkörper vorgesehen ist, der das in Abzugsrichtung durchlaufende Röhrchen außen zur Kühlung kontaktiert.

Die Erfindung betrifft weiterhin ein Verfahren zur Herstellung eines metallischen Röhrchens, in das mindestens ein Lichtwellenleiter eingebracht wird, wobei das Röhrchen aus einem langgestreckten Metallband vorgeformt wird und seine beiden Bandkanten im Schweißbereich miteinander verschweißt werden, welches dadurch gekennzeichnet ist, daß das in Abzugsrichtung durchlaufende Röhrchen im Schweißbereich außen von mindestens einem gekühlten Festkörper kontaktiert wird.

Sonstige Weiterbildungen der Erfindung sind in den

Unteransprüchen wiedergegeben.

Die Erfindung und ihre Weiterbildungen werden nachfolgend anhand von Zeichnungen näher erläutert.

Es zeigen:
- Figur 1: schematisch im Längsschnitt einen ersten Teilabschnitt einer Herstellungslinie zur Durchführung eines Herstellungsverfahrens,
- Figur 2: schematisch im Querschnitt die Herstellungslinie von Figur 1 im Bereich ihrer Schweißeinrichtung beim Verschweißen eines zu fertigenden, metallischen Röhrchens,
- Figur 3: schematisch im Querschnitt ein Leitungsseil mit einem z.B. nach Figur 1 hergestellten, Lichtwellenleiter- bestückten metallischen Röhrchen,
- Figur 4: schematisch in Draufsicht einen Teilabschnitt einer Herstellungslinie mit einer erfindungsgemäßen Schweißanordnung für ein langgestrecktes, metallisches Röhrchen, das mit mindestens einem Lichtwellenleiter und/oder Füllmasse bestückbar ist,
- Figur 5: in schematischer Querschnittsdarstellung die Schweißanordnung nach Figur 4,
- Figur 6: als Einzelheit schematisch in Draufsicht eine weitere erfindungsgemäße Schweißanordnung einer Herstellungslinie zur Fertigung eines Lichtwellenleiterbestückten, metallischen Röhrchens,
- Figur 7: schematisch im Längsschnitt einen Teil der Schweißanordnung nach Figur 6, und
- Figur 8: schematisch im Querschnitt die Schweißanordnung von Figur 6 bzw. 7 im Bereich ihrer eigentlichen Schweißstelle mit zusätzlich eingezeichneten Kühlkörpern.

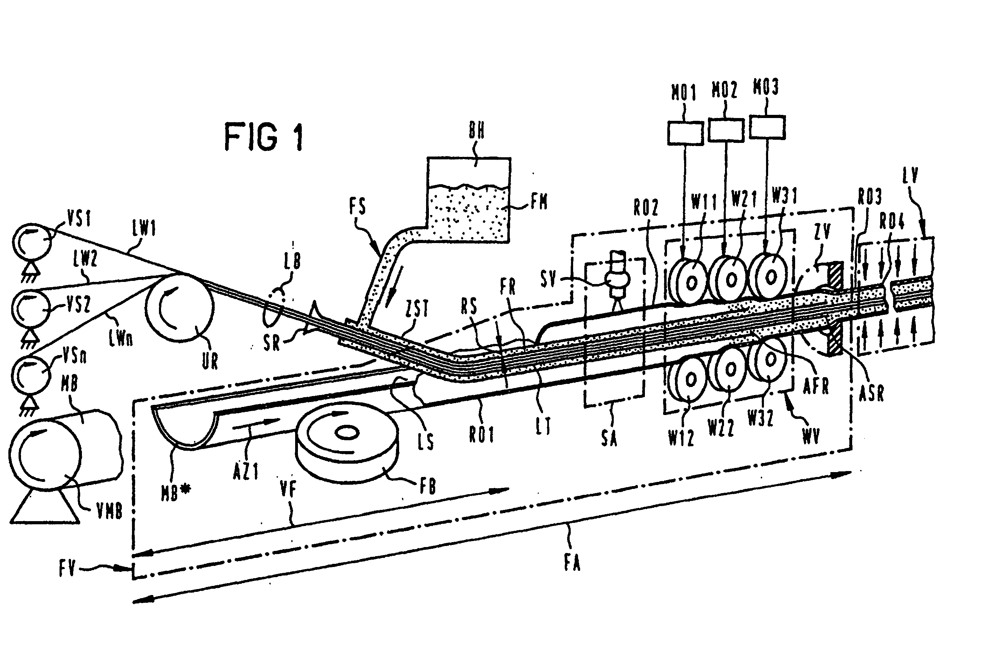

Elemente, die nach Funktion und Wirkungsweise einander entsprechen, sind in den Figuren 1 mit 16 jeweils durchgängig mit den gleichen Bezugs zeichen versehen.

Figur 1 zeigt schematisch im Längsschnitt den ersten Teilabschnitt einer Herstellungslinie zur Fertigung eines metallischen Röhrchens, das mit mindestens einem Lichtwellenleiter bestückt wird. Zweckmäßigerweise wird dabei der jeweilige Lichtwellenleiter im Röhrcheninneren in Füllmasse eingebettet. Ein solches fertiges optische Übertragungselement wird also durch ein metallische Ummantelung gebildet, in deren Inneres mindestens ein Lichtwellenleiter und/oder Füllmasse eingebracht bzw. eingeschlossen sind.

In der linken Bildhälfte von Figur 1 wird dazu ein zunächst vorzugsweise planflächiges Metallband MB, wie z.B. ein Stahl-, Edelstahl-, Kupfer-, Aluminiumband oder dergleichen von einer feststehenden Vorratsspule VMB abgezogen. Mit Hilfe einer nachfolgenden Formgebungsvorrichtung FV, die in der Figur 1 strichpunktiert eingerahmt angedeutet ist, wird dieses Metallband MB kontinuierlich zu einem metallischen Röhrchen vorgebbarer Querschnittsform umgeformt. Insbesondere wird es so umgeformt, daß es im Endzustand zylinderförmig, insbesondere etwa kreiszylinderförmig, ausgebildet ist. In der Formgebungsvorrichtung FV wird dabei das Metallband MB im wesentlichen geradlinig in Abzugsrichtung AZ1 entlang deren Formgebungsabschnitt FA vorwärtstransportiert.

Zur besseren Veranschaulichung des kontinuierlich fortschreitenden Umformungsprozesses (des ursprünglich planflächigen Metallbandes MB in ein rundum geschlossenes, zylinderförmiges, insbesondere kreiszylinderförmiges Röhrchen RO3 am Ausgang des Formgebungsabschnittes FA) ist das Metallband in der Figur 1 zusätzlich in einem Zwischenzustand, d.h. in einer Vorstufe, schematisch als Halbzylinder perspektivisch eingezeichnet und mit MB* bezeichnet. Diese erste Vorformung kann entlang einem eingangsseitigen Vorformabschnitt VF zweckmäßigerweise zum Beispiel mit Hilfe von entsprechend ausgebildeten Vorformrollen durchgeführt werden, die von außen an das Metallband MB drücken und dieses in gewünschter Weise umbiegen. Der zeichnerischen Übersichtlichkeit halber ist in der Figur 1 lediglich eine einzelne Umformrolle FB schematisch eingezeichnet, die stellvertretend für weitere, entsprechende Formwerkzeuge steht. Zweckmäßigerweise ist der Umformrolle FB auf der gegenüberliegenden Seite des halbzylindrisch vorgeformten Metallbändes MB* eine zweite Umformrolle zugeordnet, die als Gegenlager für die Umformrolle FB dient und korrespondierend zur Umlaufrolle FB ausgebildet ist. Sie ist in der Figur 1 der zeichnerischen Übersichtlichkeit halber weggelassen worden. Vorzugsweise sind mehrere derartige Umformrollenpaare - mit je einer Umformrolle zu beiden Seiten der Längserstreckung des Metallbandes MB - in Längsrichtung hintereinander angeordnet. Auf diese Weise kann das Metallband MB zu einem Röhrchen RO1 vorgeformt werden, das in Abzugsrichtung AZ1 betrachtet zunächst noch einen Längsschlitz LS aufweist (= Längsschlitz-Röhrchen). Zweckmäßigerweise wird das Längsschlitz- Röhrchen RO1 in erster Näherung kreiszylinderförmig vorgeformt. Der Längsschlitz LS verläuft dabei weitgehend geradlinig in GR 95 P 2139

Längsrichtung. Entlang diesem Längsschlitz LS stehen sich die beiden Bandkanten des Metallbandes MB mit Abstand gegenüber. In der Figur 1 verläuft der Längsschlitz LS im wesentlichen entlang der Mittenachse auf der Oberseite des Röhrchens RO1, d.h. metallischen Ummantelung.

Gleichzeitig zum Umformprozeß des Metallbandes MB werden von rotierend angetriebenen Vorratsspulen oder Vorratstellern VS1 mit VSn Lichtwellenleiter LW1 mit LWn abgespult. Diese sind im wesentlichen parallel sowie in einer gemeinsamen Lageebene nebeneinanderliegend entlang zumindest einem Teilabschnitt des Außenümfangs eines rotierend angetriebenen Laufrades UR aufgelegt. Dieses Laufrad UR ist den Vorratsspulen VS1 mit VSn nachgeordnet. Mit Hilfe einer solchen Zuführ/Transportvorrichtung lassen sich die Lichtwellenleiter LW1 mit LWn in vorteilhafter Weise zu einem sortiertem bzw. geordneten Bündel LB zusammenfassen, innerhalb dem die einzelnen Lichtwellenleiter LW1 mit LWn im wesentlichen die selbe Ablaufgeschwindigkeit aufweisen. Das Lichtwellenleiter-Bündel LB ist in der Figur 1 mit Hilfe einer strichpunktierten Umrahmung angedeutet. Zu dem Lichtwellenleiter-Bündel LB sind die Lichtwellenleiter LW1 mit LWn insbesondere lose, d.h. einzeln nebeneinanderliegend zusammengefaßt. Die Vorratsspulen VS1 mit VSn sowie das Laufrad UR werden insbesondere derart angetrieben, daß ein etwaig bremsender Einfluß auf die Transportbewegung der Lichtwellenleiter LW1 mit LWn aufgrund der Lagerreibung ihrer Aufhängungen möglichst aufgehoben, d.h. weitgehend vermieden wird. Vorzugsweise sind die Antriebe für die Vorratsspulen VS1 mit VSn sowie der Antrieb für das Laufrad UR derart aufeinander abgestimmt, daß die Lichtwellenleiter LW1 mit LWn möglichst ohne Zugspannung, d.h. möglichst locker, von ihren Vorratsspulen VS1 mit VSn abgespult sowie vorwärts transportiert werden können.

Die Lichtwellenleiter LW1 mit LWn des Bündels LB werden vorzugsweise geordnet nebeneinander sowie entlang einem weitgehend geradlinigen Laufweg einem langgestreckten Stützröhrchen SR zugeführt, das dem Laufrad UR nachgeordnet und längsortsfest bzw. feststehend angeordnet ist. Das Stützröhrchen SR ist vorzugsweise von oben durch den noch weit geöffneten Längsschlitz LS in das Innere des sich ausbildenden Längsschlitz- Röhrchens RO1 von der Eingangsseite her eingeführt, und zwar insbesondere bevor der Halbzylinder MB* zum annäherungsweise vollzylindrischen Röhrchen RO1 weiterverformt wird. Ab der Einführstelle des Stützröhrchens SR in das Längsschlitzröhrchen RO1 ist dieses in der Figur 1 aufgebrochen, d.h. im Längsschnitt dargestellt. Das Stützröhrchen SR weist eingangsseitig zweckmäßigerweise eine sich in Transportrichtung konisch verjüngende Eingangsöffnung auf, die trompetenartig nach außen entgegen der Einführrichtung des Lichtwellenleiter-Bündels LB absteht. Es ist entlang seinem eingangsseitigen Teilabschnitt als Zuführstutzen ZST ausgebildet, der im wesentlichen schräg in das Innere des Längsschlitzröhrchens RO1 hineinragt bzw. hineinhängt und dann derart in den Längsverlauf des Röhrchens RO1 abbiegt, daß es sich im Inneren des Röhrchens RO1 im wesentlichen geradlinig erstreckt. Es verläuft mit seinem Längsteil LT im Inneren des metallischen Röhrchens vorzugsweise bis zum ausgangsseitigen Ende des Formgebungsabschnittes FA. Dabei ist es in der Figur 1 vorzugsweise zentrisch innerhalb des zylinderförmigen Röhrchens RO1, d.h in der metallischen Ummantelung, untergebracht. Es erstreckt sich in Abzugsrichtung AZ1 betrachtet insbesondere annäherungsweise vom Längsort, an dem das Längsschlitzröhrchen RO1 gebildet ist, über den Schweißbereich einer nachfolgenden Schweißeinrichtung SV sowie über den Walzabschnitt einer weiter nachgeordneten Walzvorrichtung WV hinweg bis zum Ausgang der Formgebungsvorrichtung FV. Das mit der Schweißeinrichtung SV, insbesondere einem Laser oder Schweißelektroden, längsverschweißte Röhrchen ist dabei mit RO2 bezeichnet. Das Stützröhrchen SR dient insbesondere dem Zweck, die Lichtwellenleiter LW1 mit LWn bis zum Einführen bzw. Freigeben in das fertig geformte Röhrchen von außen rundum vor mechanischen, thermischen und/oder sonstigen Beanspruchungen zu schützen. (Das fertig geformte Röhrchen ist dabei in der Figur 1 mit RO3 bezeichnet.) Das Stützröhrchen gibt außerdem den Lichtwellenleitern in vorteilhafter Weise solange eine Führung vor, bis das metallische Röhrchen in seine Endform am Ausgang des Formgebungsabschnittes FA gebracht worden ist. Erst an seinem ausgangsseitigen Ende ASR läßt es die Lichtwellenleiter frei beweglich in das fertig geformte Röhrchen RO3 einlaufen. Dadurch sind seitliche, insbesondere radiale Auslenkungen oder ein laterales Ausbrechen der Lichtwellenleiter LW1 mit LWn bezüglich dem Längsverlauf der Zentralachse des Stützröhrchens SR weitgehend vermieden, so daß definierte Einlaufverhältnisse für die Lichtwellenleiter bereitgestellt sind. Die Lichtwellenleiter LW1 mit LWn folgen also dem Längsverlauf der Zentralachse des Stützröhrchens SR nach, d.h. ihnen wird ein definierter, insbesondere ein entlang der Teilabschnitte ZST, LT im wesentlichen geradliniger Wegverlauf, vorgegeben und damit eine definierte Durchlauflänge zugeordnet. Dazu weist das Stützröhrchen SR zweckmäßigerweise lediglich einen Innendurchmesser derart auf, daß die Lichtwellenleiter LW1 mit LWn nur mit wenig Spiel in ihm entlangführbar sind. Vorzugsweise ist das Lichtwellenleiter- Bündel LB höchstens mit 2/10 mm, insbesondere mit höchstens 1/10 mm Spiel im Stützröhrchen SR geführt. Eine Wellung der Lichtwellenleiter LW1 mit LWn im Inneren des Stützröhrchens SR entlang dessen Längserstreckung ist somit weitgehend vermieden. Der Innendurchmesser des Stützröhrchens SR ist vorzugsweise zwischen 0,1 und 10 mm, insbesondere zwischen 0,5 und 3 mm gewählt. Das Stützröhrchen SR erstreckt sich vorzugsweise auf einer Gesamtlänge zwischen 60 und 2000 mm.

Das Stützröhrchen SR zwingt also den Lichtwellenleitern LW1 mit LWn einen vorgebbaren, insbesondere im wesentlichen geradlinigen Bahnverlauf im Röhrchen RO1 bzw. RO2 auf, so daß eine definierte Einlauflänge für die Lichtwellenleiter LW1 mit LWn sichergestellt ist. Erst ab dem Austreten der Lichtwellenleiter LW1 mit LWn aus der ausgangsseitigen Öffnung ASR des Stützröhrchens SR ist den Lichtwellenleitern LW1 mit LWn ein sich im wesentlichen frei einstellender Bahnverlauf im Inneren des fertig verschweißten und gewalzten Röhrchens RO3 ermöglicht. Das Stützröhrchen SR wirkt in vorteilhafter Weise einem seitlichen, insbesondere radialen Ausbrechen oder Ausknicken des jeweiligen Lichtwellenleiters LW1 mit LWn bezogen auf die Zentralachse des Röhrchens entgegen, da es für den jeweiligen Lichtwellenleiter einen definierten, insbesondere im wesentlichen geradlinigen Laufweg vorgibt. Es stellt also eine (bezogen auf die Zentralachse des geradlinig durchlaufenden Röhrchens RO1) lateral, insbesondere radial wirksame Abstützung für die Lichtwellenleiter LW1 mit LWn bereit. Durch die Laufwegvorgabe mit Hilfe des Stützröhrchens SR sind in vorteilhafter Weise definierte Verhältnisse zwischen der Produktionslänge des Röhrchens RO3 und der eingefahrenen Länge des jeweiligen Lichtwellenleiters weitgehend sichergestellt. Dadurch, daß sich das Stützröbrchen SR im Röhrchen im wesentlichen geradlinig entlang dem Formgebungsabschnitt FA erstreckt, ist in besonders einfacher Weise eine direkte, eindeutige Zuordnung der Lauflänge des jeweiligen Lichtwellenleiters zur erzeugten Durchlauf länge des fertig geformten metallischen Röhrchens RO3 bereitgestellt. Auf diese Weise ist eine besonders präzise Einstellung der Lichtwellenleiterüberlänge ermöglicht.

Um auch eine Füllmasse FM mit in das fertig geformte Röhrchen RO3 einbringen zu können, ist ein weiteres Zuführröhrchen - das langgestreckte Füllröhrchen FR - vorgesehen, das in das Innere des Röhrchens RO1 von der Eingangsseite her eingeführt ist. Dieses Füllröhrchen FR ist vorzugsweise längsortsfest angebracht. Es ist zweckmäßigerweise außen um das Stützröhrchen SR herum mit Abstand derart angeordnet, daß zwischen dem Stützröhrchen SR und dem Füllröhrchen FR ein Längskanal verbleibt, insbesondere ein Ringspaltkanal gebildet ist. Mit anderen Worten ausgedrückt steckt also das Stützröhrchen SR im Füllröhrchen FR derart, daß ein Spaltfreiraum zwischen der Außenseite des Stützröhrchens SR und der Innenwand des Füllröhrchens FR zur Zufuhr von Füllmasse verbleibt. Zweckmäßigerweise wird dazu das Längsschlitz-Röhrchen RO1 mit einer solch großen Innenweite, insbesondere Innendurchmesser, vorgeformt, daß in dessem Inneren genügend Platz zum Unterbringen der Doppelanordnung von Stützröhrchen SR und Füllröhrchen FR vorhanden ist. Das Füllröhrchen FR verläuft zumindest über den Schweißbereich der Schweißeinrichtung SV hinweg. In der Figur 1 erstreckt es sich im wesentlichen geradlinig. Vorzugsweise weist das Stützröhrchen SR sowie das Füllröhrchen FR eine im wesentlichen kreiszylinderförmige Form auf. Insbesondere umgibt das Führungsröhrchen FR das Stützröhrchen SR annäherungsweise konzentrisch, so daß eine koaxiale Doppelanordnung von Stützröhrchen SR und Füllröhrchen FR gebildet ist, zwischen denen sich ein im wesentlichen kreisringförmiger Ringspaltkanal RS ergibt. In diesen Ringspalt RS zwischen dem Füllröhrchen FR und dem Stützröhrchen SR wird eingangsseitig über einen Füllstutzen FS, der mit einem Vorrats- Behälter BH verbunden ist, die Füllmasse FM eingepumpt. Als Füllmasse FM ist vorzugsweise eine thixotrope, pastenförmige, weiche Masse oder ein Gel verwendet, um das fertige, optische Übertragungselement weitgehend längswasserdicht machen zu können. Das Füllröhrchen FR ist dabei zweckmäßigerweise im Eingangsbereich des Stützröhrchens SR abgedichtet. Das ausgangsseitige Ende des Püllröhrchens FR endet in Längsrichtung betrachtet vorzugsweise vor dem ausgangsseitigen Ende des Stützröhrchens SR, das heißt das Stützröhrchen SR ragt mit seinem Ende über den Ausgang des Füllröhrchens FR hinaus. Das Füllröhrchen FR weist in Abzugsrichtung AZ1 betrachtet also eine kleinere geradlinige Längserstreckung als das Stützröhrchen SR für die Lichtwellenleiter LW1 mit LWn auf. Dadurch wird sichergestellt, daß in Abzugsrichtung AZ1 betrachtet zuerst die Füllmasse FM in das Röhrchen RO2 eingebracht wird, bevor die Lichtwellenleiter LW1 mit LWn hinzugegeben werden. Auf diese Weise ist es in vorteilhafter Weise ermöglicht, die Lichtwellenleiter LW1 mit LWn von der Füllmasse FM später mit in das fertige Röhrchen RO3 hineinschleppen zu lassen. Das Füllröhrchen FR erstreckt sich vorzugsweise bis etwa in die Mitte der Längserstreckung oder höchstenfalls bis zum Ausgang der Walzvorrichtung WV. Demgegenüber endet das Stützröhrchen SR in Abzugsrichtung AZ1 betrachtet vorzugsweise erst später, wie z.B. nach dem Ausgang der Walzvorrichtung WV oder erst nach einer etwaigen Ziehvorrichtung wie z.B. ZV. Das Füllröhrchen FR folgt also dem Verlauf des Stützröhrchens SR nach, endet aber bereits vor dem Ausgang ASR des Stützröhrchens SR. Mit Hilfe des Füllröhrchens FR wird die Füllmasse FM somit erst zu einem Zeitpunkt in das Röhrchen eingebracht, bevor dieses auf seine Endmaße heruntergewalzt, d.h. querschnittsreduziert worden ist. Dadurch ist sichergestellt, daß die Füllmasse FM nach Vollendung des Walzvorganges und des gegebenenfalls anschließenden Ziehvorganges das Innere des fertig geformten Röhrchens RO3 im wesentlichen vollständig ausfüllt. Für das Stützröhrchen SR und/oder das Füllröhrchen FR ist zweckmäßigerweise ein Material oder eine Beschichtung hoher Temperaturfestigkeit verwendet, da das Stützröhrchen SR sowie das Füllröhrchen FR im Röhrchen RO1 unter der Schweißstelle der Schweißeinrichtung SV hinweg geführt sind..Vorzugsweise ist für das Stützröhrchen SR und/oder das Füllröhrchen FR ein Metall, insbesondere hartgezogener bzw. gehärteter Edelstahl gewählt, um die Füllmasse und/oder die Lichtwellenleiter vor mechanischen und/oder thermischen Beanspruchungen sowie sonstigen Störungen beim Einbringen in das Röhrchen zu schützen.

Besonders zweckmäßig kann es sein, dem Längsschlitz- Röhrchen RO1 vor dem Verschweißen seines Längsschlitzes LS eine Querschnittsform mit möglichst großer Innenweite, insbesondere Innendurchmesser, zu geben, um die Doppelanordnung der Zuführ- Röhrchen FR/SR auf möglichst großem Abstand von der sich ausbildenden Schweißnaht des metallischen Röhrchens RO2 halten zu können. Dabei kann es besonders vorteilhaft sein, das Füllröhrchen FR sowie das in ihm gelagerte, d.h. in ihm steckende Stützröhrchen SR möglichst auf derjenigen Innenseite des Längsschlitzröhrchens anzuordnen, die dem zu verschweißenden Längsschlitz LS gegenüberliegt. Wird beispielsweise das Röhrchen RO1 - wie in Figur 1 dargestellt - von oben mit Hilfe der Schweißeinrichtung SV verschlossen, so ist es zweckmäßig, die Doppelanordnung von Füllröhrchen FR und Stützröhrchen SR entlang der um etwa 180° gegenüberliegenden Innenwand, d.h. am Boden der metallischen Ummantelung bzw. dem Röhrchen RO1 anzuordnen. Auf diese Weise kann der Abstand zwischen der Schweißeinrichtung SV und dem Füllröbrchen FR bzw. dem Stützröhrchen SR möglichst groß gehalten werden, so daß die Intensität der durch die Schweißeinrichtung SV abgegebenen Hitzestrahlung am Ort des Füllröhrchens FR sowie des Stützröhrchenes SR bereits etwas abgeklungen ist.

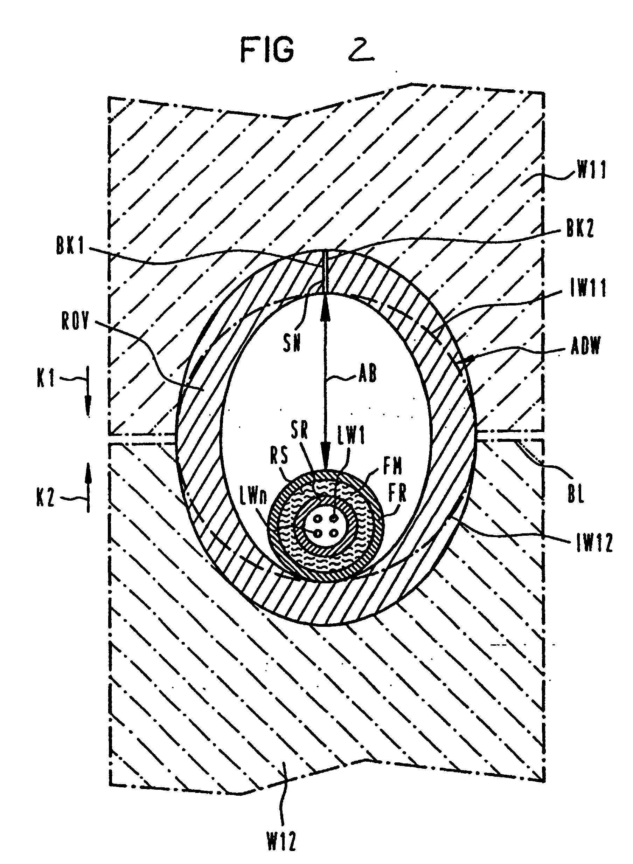

Weiterhin kann es besonders zweckmäßig sein, das Längsschlitz- Röhrchen (anstelle mit einer kreisförmigen Querschnittsform) hochovalförmig für den Schweißvorgang vorzuformen. Figur 2 zeigt eine derart hochoval vorgeformte metallische Ummantelung vergrößert im Querschnitt. Dadurch ist für den Schweißvorgang die lichte Innenweite zwischen der Doppelanordnung der Zuführ- Röhrchen SR/FR und der zu bildenden Schweißnaht gegenüber den Abstandsverhältnissen in einem kreiszylinderförmig ausgebildeten Längsschlitz-Röhrchen noch weiter vergrößert.

Zusammenfassend betrachtet wird also die lichte Innenweite, insbesondere der Innendurchmesser, des zu verschweißenden Längsschlitz-Röhrchens RO1 wesentlich größer als die lichte Innenweite, insbesondere der Innendurchmesser, des fertig gewalzten Röhrchens RO3 am Ausgang der Formgebungsvorrichtung FV gewählt. Vorzugsweise hat das zu verschweißende Röhrchen RO1 einen mindestens 10 %, insbesondere um etwa 50% größeren Innendurchmesser als das fertig geformte, gewalzte Röhrchen RO3. Insbesondere gelten vorstehende Aussagen auch für die maximale lichte Innenweite des metallischen Röhrchens bei hochovaler Querschnittsform gemessen zwischen dessen Oberund Unterseite.

Das Längsschlitz- Röhrchen RO1 bzw. das fertig verschweißte Röhrchen RO2 weist vorzugsweise eine Wandstärke zwischen 0,1 und 10 mm, insbesondere zwischen 0,1 und 1 mm auf. Die Spaltbreite des Ringspaltkanals RS ist vorzugsweise mindestens gleich 0,2 mm, insbesondere zwischen 0,2 und 1 mm gewählt. Das Füllröhrchens FR endet vorzugsweise vor dem Ende des Stützröhrchens SR, d.h. das Stützröhrchen SR ragt mit seinem Ende über den Ausgang des Füllröhrchens FR hinaus. Vorzugsweise ragt das Stützröhrchen um mindestens 100 mm, bevorzugt zwischen 200 und 400 mm über das Ende des Füllröhrchens hinaus. Vorzugsweise erstreckt sich das Füllröhrchen FR bis etwa in die Mitte der Walzvorrichtung WV, die entlang dem ausgangsseitigen Endabschnitt der Formgebungsvor richtung FV angeordnet ist. Das Stützröhrchen SR endet hingegen in Abzugsrichtung AZ1 betrachtet erst später, insbesondere im Ausgangsbereich der Walzvorrichtung WV bzw. einer der Walzvorrichtung WV etwaig nachgeordneten Ziehvorrichtung ZV. Mit Hilfe des Füllröhrchens FR wird also die Füllmasse FM bereits zu einem Zeitpunkt in das Röhrchen RO2 hineingebracht, bevor dieses auf seinen kleineren Enddurchmesser heruntergeformt worden ist. Dadurch ist weitgehend sichergestellt, daß die Füllmasse FM nach Vollendung des Walzvorganges bzw. des nachfolgenden Ziehvorganges das fertig geformte Röhrchen vollständig im Inneren ausfüllt.

Zweckmäßigerweise weist das Stützröhrchen einen Innendurchmesser auf, der mindestens 2/10 mm kleiner als der Innendurchmesser des fertigen Röhrchens am Ende der Herstellungslinie ist. Zweckmäßigerweise weist das Füllröhrchen einen Außendurchmesser auf, der mindestens 5/10 mm kleiner als der Innendurchmesser des ungewalzten, verschweißten Röhrchens RO2 ist. Der Außendurchmesser des Füllröhrchens FR ist vorzugsweise zwischen 4 und 6 mm gewählt.

Figur 2 zeigt schematisch im Querschnitt das metallische Röhrchen für die Lichtwellenleiter im Bereich der Schweißeinrichtung SV im ersten Teil des Formgebungsabschnitts FA von Figur 1. Dort ist das Metallband MB zweckmäßigerweise zu einem hochovalen Röhrchen ROV vorgeformt, wobei seine Bandkanten aneinanderstoßen. Das Röhrchen ROV weist somit eine Querschnittsform auf, deren lichte Innenweite (zwischen den beiden, miteinander zu verschweißenden Bandkanten auf der Oberseite und der um etwa 180° gegenüberliegenden Röhrcheninnenwand auf der Unterseite) gegenüber der lichten Weite eines lediglich kreiszylinderförmig vorgeformten Röhrchens vergrößert ist. Die dazu erforderlichen Formwerkzeuge sind in den Figuren 1 sowie 2 der Übersichtlichkeit halber weggelassen worden. Das Füllröhrchen FR mit dem in ihm angeordneten - insbesondere konzentrisch angeordneten - Stützröhrchen SR erstreckt sich vorzugsweise entlang derjenigen Innenseite der ovalförmigen, metallischen Ummantelung ROV, die der gebildeten Schweißnaht SN des Röhrchens R02 gegenüberliegt, d.h. es läuft am Boden des Röhrchens RO1 entlang. Dadurch, daß das Füllröhrchen FR auf möglichst großem Abstand AB von der Innenfläche der Schweißnaht SN gehalten wird, wird für die Lichtwellenleiter LW1 mit LWn bereits eine erste thermische Isolierung bereitgestellt, die durch den luftgefülltem Spaltraum zwischen der Schweißnaht SN und der Außenwand des Füllröhrchenes FR gebildet ist. Das Füllröhrchen FR selbst wirkt radial nach innen als weitere thermische Isolationsschicht. Die Füllmasse FM wiederum wirkt ebenfalls als thermische Isolationsschicht. Das Stützröhrchen SR bewirkt eine weitere thermische Abschirmung für die in ihm liegenden Lichtwellenleiter LW1 mit LWn. Auf diese Weise ist für die Lichtwellenleiter LW1 mit LWn eine mehrschichtige, insbesondere vierschichtige thermische Isolationshülle und damit eine besonders wirkungsvolle thermische Abschirmung bzw. Barriere gebildet. Denn die Lichtwellenleiter LW1 mit LWn sind durch mehrere Isolierschichten von der Schweißstelle thermisch getrennt. Im einzelnen sind dies von innen nach außen betrachtet: der Mantel des Stützröhrchens SR, die Füllmasse FM im Ringspaltkanal RS zwischen dem Füllröhrchen FR und dem Stützröhrchen SR, der Mantel des Stützröhrchens SR sowie der luftgefüllte Raum AB zwischen dem Füllröhrchen FR und der Innenberandung des verschweißten Röhrchens RO2. Etwaig unzulässig hohe thermische Beanspruchungen der Lichtwellenleiter LW1 mit LWn und/oder der Füllmasse FM können auf diese Weise beim Verschweißen der Längsnaht des hochoval vorgeformten Röhrchens ROV weitgehend vermieden werden.

Dem längsverschweißten Röhrchen RO2 wird anschließend mit Hilfe einer der Schweißeinrichtung SV nachgeordneten Walzvorrichtung WV eine vorgebbare Querschnittsform aufgeprägt. Insbesondere kann mit Hilfe der Walzvorrichtung WV das geschweißte Röhrchen RO2 in präzise kontrollierbarer Weise im Durchmesser reduziert und gelängt werden. Dazu weist die Walzvorrichtung bzw. das Walzwerk WV mindestens eine scheibenförmige, insbesondere etwa kreiszylinderförmige Walze auf. Vorzugsweise sind beidseitig der Längserstreckung des vorzugsweise geradlinig durchlaufenden Röhrchens RO2 mehrere Walzen hintereinander positioniert, die jeweils paarweise einander zugeordnet sind. Im Längsschnittbild von Figur 1 sind beispielhaft drei Walzenpaare W11/W12, W21/W22, W31/W32 angedeutet, die jeweils beidseitig der Längserstreckung des vorzugsweise geradlinig durchlaufenden Röhrchens RO2 eine Walze aufweisen. Ihre Walzen sind auf der Oberseite (in Abzugsrichtung AZ1 gesehen) mit W11, W21, W31 sowie mit W12, W22, W32 auf der gegenüberliegenden Unterseite des Röhrchens RO2 bezeichnet. Dabei korrespondieren jeweils zwei Walzen auf gegenüberliegenden Längsseiten des Röhrchens RO2 miteinander, d.h. sie bilden jeweils ein Walzenpaar. Jede Walze ist drehbar aufgehängt. Dem jeweiligen Walzenpaar wie z.B. W11/W12, W21/W22. W31/W32 ist vorzugsweise jeweils eine eigenständige Antriebsvorrichtung wie z.B. MO1 mit MO3, insbesondere ein Motor, zugeordnet, so daß ein aktiver Antrieb für jede Walze ermöglicht ist. Die Laufflächen je zweier, einander zugeordneter Walzen jedes Walzenpaares rollen auf gegenüberliegenden Teilhälften des Röhrchens RO2 an dessem Außenmantel ab und üben dabei auf dessen Außenwandfläche eine vorgebbare Druckkraft ins Röhrcheninnere aus. Im Längsschnittbild von Figur 1 sind dies in Durchlaufrichtung bzw. Abzugsrichtung AZ1 betrachtet im einzelnen die Walzen der drei unmittelbar in einer Reihe hintereinander angeordneten Walzenpaare W11/W12, W21/W22, W31/W32. Jeweils zwei einander zugeordnete Walzen schließen dabei das durchlaufende Röhrchen RO2 zwischen sich ein und geben für dieses eine Durchgangsöffnung bestimmter Querschnittsform vor. Vorzugsweise weisen die beiden aufeinander abrollenden Walzen des jeweiligen Walzenpaares im Querschnitt betrachtet jeweils insbesondere eine etwa halbkreisförmige Ausnehmung bzw. Innenkontur(radial nach innen zum Walzenmittelpunkt hin betrachtet) an ihrem Außenumfang, d.h. an ihrer jeweiligen Lauffläche auf. Auf diese Weise ist zwischen den Laufflächen je zweier aufeinander abrollender Walzen vorzugsweise ein etwa kreiszylinderförmiger Durchlaß bereitgestellt. Dessen Querschnittsform wird dem Röhrchen RO2 vorzugsweise durch radiale Querdruckpressung aufgeprägt bzw. aufgedrückt. Dabei wird das Material der Röhrchenwand radial nach innen (bezogen auf die Zentralachse des Röhrchens) gedrückt und unter Materialfließen plastisch verformt. Die Querdruckpressung bewirkt dabei zum einen, daß das Röhrchen RO2 queraxial, insbesondere radial gestaucht und dadurch sein Innen- sowie Außendurchmesser reduziert wird. Gleichzeitig kommt es durch die Querdruckpressung zu einer Materialverdrängung bzw. einem Materialfließen entlang der Längserstreckung des Röhrchens RO2, so daß dieses gelängt, d.h. verlängert wird. Insbesondere wird das Röhrchen pro Walzenpaar, d.h. allgemein ausgedrückt pro Walzvorgang, um etwa denselben Prozentsatz (bezogen auf seine Länge vor dem Walzvorgang) gelängt, wie es pro Walzvorgang in radialer Richtung (bezogen auf seinen Außendurchmesser vor dem Walzvorgang) gestaucht wird. Dadurch bleibt die Wanddicke des Röhrchens beim Walzen annäherungsweise konstant, während der Außen- sowie der Innendurchmesser des Röhrchens um etwa denselben Prozentsatz verkleinert wird. Es wird somit eine Reduzierung der torus- bzw. ringförmigen Wandquerschnittsfläche des Röhrchens RO2 bei im wesentlichen konstanter Wanddicke erreicht.

In Abzugsrichtung AZ1 betrachtet wird die Weite der Durchgangsöffnung zwischen je zwei einander zugeordneten Walzen von Walzenpaar zu Walzenpaar schrittweise verkleinert, d.h. der Querschnitt der Durchgangsöffnung für das Röhrchen wird von einem Walzenpaar zum nächsten stufenweise reduziert und dadurch eine sukzessive Querschnittsreduzierung des Röhrchens RO2 erreicht. Die einander zugeordneten Walzen W21, W22 sind also näher an die Zentralachse des durchlaufenden Röhrchens RO2 herangerückt als das erste Walzenpaar W11/W12. Das dritte Walzenpaar W31/W32 weist gegenüber dem zweiten Walzenpaar W21/W22 schließlich eine Durchgangsöffnung auf, deren lichte Weite wiederum gegenüber dem Innendurchmesser der vorgegebenen Durchgangsöffnung des vorausgehenden, zweiten Walzenpaares W21/W22 verkleinert ist.

Die Transportgeschwindigkeiten je zweier in Abzugsrichtung AZ1 aufeinanderfolgender Walzenpaare wie z.B. W11/W12, W21/W22 werden vorzugsweise derart unterschiedlich eingestellt, daß zusätzlich zur normal eingefahrenen Lauflänge des Röhrchens RO2 zumindest auch dessen durch Querdruckpressung, d.h. queraxialer Stauchung erzielte Längung aus dem Zwischenraum zwischen den beiden aufeinanderfolgenden Walzenpaaren in Abzugsrichtung AZ1 mit heraustransportiert werden kann. Besonders zweckmäßig kann es sein, die Transportgeschwindigkeit des (in Abzugsrichtung AZ1 betrachtet) jeweilig ausgangsseitigen Walzenpaares wie z.B. W21/W22 lediglich um einen solchen Prozentsatz größer als die Transportgeschwindigkeit des jeweilig eingangsseitig vorausgehenden Walzenpaares wie z.B. W11/W12 zu wählen, der annäherungsweise dem Prozentsatz der durch Querdruckpressung erreichten Verlängerung des Röhrchens RO2 (gegenüber dessen ursprünglich eingefahrenen Lauflänge) entspricht. Dadurch, daß bei je zwei aufeinanderfolgenden Walzenpaaren das ausgangsseitige Walzenpaar insbesondere soviel schneller als das jeweilig vorausgehende, d.h. eingangsseitig benachbarte Walzenpaar läuft, wie dieses prozentual das durchlaufende Metallröhrchen RO2 längt, verbleibt das Röhrchen RO2 beim Walzvorgang weitgehend zugspannungsneutral. Die Transportgeschwindigkeit der mehreren, hintereinandergereihten Walzenpaare wie z.B. W11/W12, W21/W22, W31/W32 nimmt also sukzessive pro Walzenpaar vorzugsweise um einen solchen Betrag zu, daß lediglich die durch Querdruckstauchung in Längsrichtung erzeugte Überlänge zusätzlich aus der Walzstrecke mit heraustransportiert werden kann. Bei einer solchen Walzung wird also das Röhrchen RO2 durch den Antrieb der Walzen bevorzugt derart vorwärtstransportiert, daß jeweils lediglich die durch Querdruckpressung erzeugte Längung des Röhrchens ausgeglichen wird. Unzulässig hohe Zugspannungskräfte sowie Stauchkräfte in Längsrichtung des Metallröhrchens RO2 können somit weitgehend vermieden werden.

Weiterhin ermöglichen es die angetriebenen Walzen in vorteilhafter Weise, die Transportgeschwindigkeit für das Röhrchen von einem Walzenpaar zum nächsten Walzenpaar in präzise kontrollierbarer Weise einzustellen. Dadurch ist es gegebenenfalls möglich, jeweils nur entlang der kurzen Durchlaufstrecke zwischen je zwei in Längsrichtung aufeinanderfolgenden Walzenpaaren auf das Metallröhrchen RO2 in Abzugsrichtung AZ1 präzise dosiert eine zusätzliche, vorgebbare Zugkraft auszuüben, um das Röhrchen zusätzlich zur Längung aus dem Walzvorgang (Querdruckpressung) zu längen.

Vorzugsweise sind zwischen 1 und 10 Walzenpaare, insbesondere zwischen 3 und 7 Walzenpaare zum Walzen je nach gewünschter Längung sowie Durchmesserreduzierung des Röhrchens hintereinandergereiht. Pro Walzenpaar läßt sich vorzugsweise eine Längung, d.h. Verlängerung des Röhrchens gegenüber seiner ursprünglichen Lauflänge vor dem jeweiligen Walzenpaar, zwischen 5 und 20 %, insbesondere zwischen 5 und 15% erreichen. Da die Wanddicke des Röhrchens beim Walzvorgang im wesentlichen konstant bleibt, ergibt sich anders ausgedrückt pro Walzenpaar eine Reduzierung der ringförmigen Wandquerschnittsfläche zwischen 5 und 20%, insbesondere zwischen 5 und 15% bezogen auf die Wandquerschnittsfläche vor dem jeweiligen Walzvorgang. Das Röhrchen ist nach Verlassen der Walzvorrichtung WV insgesamt vorzugsweise um 10 bis 70% seiner ursprünglich in die Walzvorrichtung WV eingefahrenen Länge gelängt.

Die Walzvorrichtung WV zeichnet sich insbesondere dadurch aus, daß entlang einer relativ kurzen Walzstrecke, bevorzugt zwischen 0,5 und 1,5 m Gesamtlänge, eine besonders effektive und zugleich materialschonende Längung und Querschnittsreduzierung des Röhrchens durchgeführt werden kann. Da die Walzen des jeweiligen Walzenpaares rotierend angetrieben sind, wird das Röhrchen RO1 zugleich während der Querdruckpressung in Abzugsrichtung AZ1 vorwärtsgeschoben, so daß ein "Festfressen" bzw. Steckenbleiben des Röhrchens im jeweiligen Walzenpaar und damit Abreißen des Röhrchens weitgehend vermieden ist. Dabei sind beim Abrollen der jeweiligen Walze an der Außenwand des Röhrchens die dort wirksam werdenden Reibungskräfte weitaus geringer als bei der Kontaktierung der Außenwand mit lediglich einem starren, ortsfesten, d.h. unbeweglich aufgehängten Ziehstein. Dadurch ist beim Walzen die Querschnittsflächenspannung in der im Querschnitt betrachtet ringförmigen Außenwand des Röhrchens (in Abzugsrichtung AZ1) gegenüber der beim Ziehen mittels eines Ziehsteines in vorteilhafter Weise verringert, so daß beim Walzen eine Spannungsrißbildung in der Röhrchenaußenwand weitgehend vermieden ist.

Gegenüber einer herkömmlichen Querschnittsreduzierung mittels "Ziehstein" zeichnet sich das Walzen somit insbesondere dadurch aus, daß unzulässig hohe Zugspannungskräfte am Röhrchen und damit Spannungsrisse oder gar ein Abreißen des Röhrchens RO2 weitgehend vermieden sind.

Durch die beim Walzen erzeugte Längung wird zudem in vorteilhafter Weise erreicht, daß die Durchlaufgeschwindigkeit des Röhrchens beim Durchlaufen der Schweißanordnung SA geringer als seine Fertigungsgeschwindigkeit beim Verlassen der Walzvorrichtung ist. Insbesondere ergibt sich bei einer Durchmesserreduzierung um 100% mittels Walzen (unter Beibehaltung der Wanddicke des Röhrchens) etwa eine Verdoppelung der Ausstoßgeschwindigkeit des Röhrchens bei Verlassen der Walzvorrichtung (="Rationalisierungseffekt"). Dies erlaubt auf der einen Seite eine zuverlässige Verschweißung des Röhrchens bei relativ niedriger Fertigungsgeschwindigkeit. Auf der anderen Seite kann gleichzeitig ein hoher Fertigungsausstoß sichergestellt werden.

Da die Walzenpaare teilbar ausgebildet sind, ist ihre Handhabung in vorteilhafter Weise wesentlich vereinfacht. Weiterhin läßt sich ein und dieselbe Walzvorrichtung in vorteilhafter Weise flexibel für verschieden durchmesserstarke Röhrchen einsetzen. So können zum Beispiel für dickere Röhrchen die Walzen einzelner Walzenpaare (wie z.B. am Ende der Walzstrecke, wo der Durchgang für das Röhrchen geringer wie am Anfang ist,) der bezüglich ihres Durchmessergröße abgestuften Abfolge von Walzenpaaren weiter auseinander- oder ganz weggeklappt werden.

Eine Walzvorrichtung nach dem aufgezeigten Prinzip läßt sich in vorteilhafter Weise selbstverständlich auch in anderen als den in den Figuren 1 und 2 gezeigten Herstellungslinien für Lichtwellenleiter- bestückte Metallröhrchen einsetzen.

Zur besseren Veranschaulichung von Funktion und Wirkungsweise der Walzvorrichtung von Figur 1 ist im Querschnittsbild von Figur 2 beispielhaft deren Walzenpaar W11/W12, das der Schweißanordnung SA von Figur 1 nachgeordnet ist, zusätzlich strichpunktiert mit eingezeichnet. Die Reduzierwalzen W11 bzw. W12 weisen jeweils eine halbkreisförmige Innenkontur IW11 bzw. IW12 auf. Die Reduzierwalze W11 ist dabei der oberen Teilhälfte, die Reduzierwalze W12 der 180° gegenüberstehenden, unteren Teilhälfte des hochovalförmigen Röhrchens ROV zugeordnet. Die beiden Reduzierwalzen W11, W12 drücken in radialer Richtung bezogen auf die Zentralachse des (für den Schweißvorgang vorzugsweise) oval vorgeformten Röhrchens ROV aneinander, was durch zwei entgegengesetzte Pfeile K1, K2 angedeutet ist. Sie rollen im Bereich ihrer gemeinsamen Berührungslinie BL, die sich queraxial zur Abzugsrichtung AZ1 erstreckt, aufeinander ab und schließen das Röhrchen ROV formscblußartig zwischen sich ein. Die beiden Reduzierwalzen W11, W12 schließen somit aufeinander abrollend eine Durchgangsöffnung kreiszylinderförmiger Querschnittsform zwischen sich ein. Deren Querschnittsabmessungen sind gegenüber der maximalen Querschnittsbreite des hochovalförmigen Röhrchens ROV verringert. Die vorgegebene Querschnittsform dieser Durchgangsöffnung zwischen den beiden Walzen W11, W12 ist in der Figur 1 mit Hilfe eines strichpunktiert gezeichneten Kreises ADW angedeutet. Dieser Kreis ADW verläuft im wesentlichen innerhalb des Außenumfangs des ovalförmigen Röhrchens ROV. Auf diese Außenquerschnittsform des Kreises ADW wird das ovalförmige Röhrchen ROV durch die Walzen W11, W12 radial nach innen zusammengedrückt. Insbesondere ist es durch den Walzvorgang ermöglicht, die Spitzen des ovalförmigen Röhrchenes ROV abzurunden, d.h. nach innen zu drücken und somit eine plastische Verformung des ovalförmigen Röhrchens ROV in ein bevorzugt etwa kreiszylinderförmiges Röhrchen RO mit reduziertem Außendurchmesser umzuformen. Die hintereinandergereihten Walzenpaare W11/W12, W21/W22, W31/W22 weisen jeweils Durchgangsöffnungen auf, die in Abzugsrichtung AZ1 betrachtet, einen stufenweise verkleinerten Innendurchmesser aufweisen. Auf diese Weise wird das ovalförmige Röhrchen ROV stufenweise bzw. schrittweise pro Walzenpaar im Durchmesser reduziert und eine radiale Stauchung auf einen kleineren Außendurchmesser gegenüber den ursprünglichen Querschnittsmessungen vor der Walzvorrichtung WV vorgenommen. Der Walzvorgang zeichnet sich vor allem dadurch aus, daß die rotierend angetriebenen Walzen außen auf der metallischen Ummantelung bzw. dem Röhrchen ROV unter radialer Druckausübung abrollen und dabei das zwischen sich eingepreßte Röhrchen ROV in Abzugsrichtung AZ1 vorschieben bzw. weiter transportieren. Durch diese Kombination von radialem Stauchen und axialem Vorschub werden unzulässig hohe Zug- Beanspruchungen, die z.B. zu einem Abreißen des Röhrchenes ROV führen könnten, weitgehend vermieden. Die bloße Verwendung von Ziehsteinen herkömmlicher Art würde nämlich zu einem Aufrauhen oder Reißen der metallischen Ummantelung bzw. des Röhrchens führen. Da bei Ziehsteinen lediglich in axialer Richtung vom Ende der Herstellungslinie her am Röhrchen ROV gezogen werden würde, würde das Röhrchen nämlich am jeweiligen Ziehstein lokal eingeschnürt werden oder sich dort gar "Festfressen". Im Gegensatz dazu werden die Walzenpaare W11/W12, W21/W22, W31/W32 von Figur 1 mit Hilfe der zugeordneten Antriebseinrichtungungen MO1, MO2, MO3, insbesondere Motoren eigenständig angetrieben und eine Vorschubbewegung des Röhrchenes RO2 bewirkt. Da der Walzvorgang eine plastische Kaltverformung der metallischen Ummantelung bewirkt, wird diese zudem in vorteilhafter Weise verhärtet und damit besonders widerstandsfähig gegen etwaige mechanische, chemische und/oder thermische Beanspruchungen.

Gegebenenfalls kann es zweckmäßig sein, der Walzvorrichtung WV noch eine Ziehvorrichtung, insbesondere mindestens einen Ziehstein oder eine Ziehdüse nachzuordnen. Im Längsschnittbild von Figur 1 ist der Walzvorrichtung WV beispielhaft der Ziehstein ZV nachgeordnet und strichpunktiert zur Hälfte angedeutet. Er weist eine sich konusförmig verjüngende Durchgangsöffnung mit vorgebbaren Querschnittsabmessungen auf. Er dient nur noch einer abschließenden Glättung bzw. Entgratung oder abschließenden Längung des gewalzten Röhrchens RO2.

Auf diese Weise ist es mit Hilfe der Walzvorrichtung ermöglicht, dem Röhrchen je nach Wahl der Innenkontur der Laufflächen seiner Walzen eine vorgebbare Querschnittsform aufzuprägen. Insbesondere läßt sich mit dem Walzvorgang, d.h. nach der Fertigformung, ein vorzugsweise etwa kreiszylinderförmiges Röhrchen RO3 mit gewünschten Querschnittsabmessungen erhalten.

Für eine Querschnittsreduzierung des Röhrchens RO2 mit Hilfe der Walzvorrichtung WV kann es gegebenenfalls auch bereits ausreichend sein, die jeweilige Reduzierwalze eines Walzenpaares lediglich auf einem Teilabschnitt des Außenumfangs des kalt zu verformenden Röhrchenes ROV abrollen zu lassen, der kleiner als die Hälfte des gewünschten . Außenumfangs für das Röhrchen nach dem jeweiligen Walzenpaar ist. Zweckmäßig kann es gegebenenfalls auch sein, die Walzenpaare jeweils in Umfangsrichtung gegeneinander versetzt bzw. verdreht hintereinander anzuordnen. Dadurch ist am Außenumfang des Röhrchenes RO2 eine im wesentlichen gleichmäßige Kaltverformung erreichbar. Bei drei hintereinander angeordneten Walzenpaaren, wie sie in Figur 1 dargestellt sind, ist es somit zweckmäßig, die Walzenpaare jeweils um 120° am Außenumfang gegeneinander verdreht zu positionieren. Selbstverständlich kann es auch zweckmäßig sein, pro Längsort mehr als zwei Walzen rings um den Außenumfang des Röhrchens RO2 anzuordnen. So können beispielsweise pro Längsort vier Walzen in Form von 90°-Segmenten dem Außenumfang des Röhrchens zugeordnet sein. Dabei kann es ausreichend sein, lediglich zwei gegenüber stehende Walzen rotierend anzutreiben, während die verbleibenden beiden Walzen nicht eigens motorisch angetrieben sind und lediglich am Außenumfang des durchlaufenden Röhrchens aufgrund des bewirkten Reibungsund/oder Formschlusses abrollen.

In der Figur 1 erstreckt sich das Füllröhrchen FR etwa bis zur Mitte der Walzvorrichtung WV und wird dort in das gewalzte Röhrchen noch vor dessen Reduzierung auf einen vorgebbaren Enddurchmesser hineingepumpt. Dadurch füllt die Füllmasse FM das Röhrchen nach dem Reduzieren auf Enddurchmesser, das heißt nach Verlassen der Walzvorrichtung WV voll aus. Das Stützröhrchen SR erstreckt sich hingegen bis etwa zum Ende des Formgebungsabschnittes FA, das heißt über das ausgangsseitige Ende der Walzvorrichtung WV hinweg und damit über das Füllröhrchenende hinaus. Dadurch ist weitgehend sichergestellt, daß die Lichtwellenleiter LW1 mit LWn von der Füllmasse FM mit derselben Geschwindigkeit wie die metallische, fertig geformte Ummantelung RO3 in Abzugsrichtung AZ1 mitgeschleppt wird. Die Konsistenz der Füllmasse FM wird insbesondere derart gewählt, daß eine im wesentlichen feste Ankopplung der Lichtwellenleiter LW1 mit LWn an das Röhrchen RO4 ab dem Längungsabschnitt LA erreicht wird. Vorzugsweise wird für die Füllmasse FM eine Viskosität von mindestens 10000 mP sec gewählt. Eine solch hochviskose Füllmasse FM bettet die Lichtwellenleiter LW1 mit LWn weich ein und stellt über ihre Flüssigkeitsreibung eine feste Ankopplung zur Innenwand des durchlaufenden Röhrchens RO3 her. Mit anderen Worten heißt das, daß die Lichtwellenleiter LW1 mit LWn gleichlaufend, das heißt synchron zur Produktionsgeschwindigkeit des aus der Walzvorrichtung WV kommenden Röhrchens RO2 mitgezogen werden, d.h. daß der jeweilige Lichtwellenleiter von der Füllmasse aufgrund deren Flüssigkeitsreibung derart mitgeschleppt wird, daß er im Längungsabschnitt im wesentlichen die gleiche Transportgeschwindigkeit wie das fertiggeformte Röhrchen aufweist. Am Ausgang des Formgebungsabschnittes FA ist also eine definierte Relativbeziehung zwischen der Länge des fertig geformten Röhrchens RO3 und der einlaufenden Länge der Lichtwellenleiter LW1 mit LWn hergestellt. Das Stützröhrchen SR dient insbesondere dazu, die Lichtwellenleiter LW1 mit LWn mit einer sehr geringen Zugkraft und relativ geringer Reibung bis zum Stützröhrchenende am Ausgang der Formgebungsvorrichtung FA zu leiten. Auf die Lichtwellenleiter LW1 mit LWn wird dabei vorzugsweise höchstens eine Zugkraft von 50 cN, insbesondere zwischen 5 und 10 cN ausgeübt. Auf diese Weise laufen die Lichtwellenleiter LW1 mit LWn im wesentlichen locker, d.h. zugspannungsarm in das Röhrchen RO3 ein.

Insgesamt betrachtet weist der Formgebungsabschnitt FA vorzugsweise eine Gesamtlänge zwischen 4 und 10 m, insbesondere zwischen 4 und 6 m auf.

Dem Formungsabschnitt FA folgt unmittelbar eine Längungsvorrichtung LV nach, die in der Figur 1 aus Platzgründen lediglich ausschnittsweise dargestellt ist. Ausgehend vom Ausgang des Formgebungsabschnittes FA wird das Röhrchen RO3 entlang einem Längungsabschnitt geradlinig weiter transportiert.

Das Herstellungsverahren gemäß der Figur 1 zeichnet sich vor allem dadurch aus, daß das metallische Röhrchen stets geradlinig vorwärts transportiert wird. Dadurch kann besonders effektiv die Längung des Röhrchens entlang dem Längungsabschnitt durch reversible Verkürzung in die Erzeugung von Überlänge der Lichtwellenleiter LW1 mit LWn umgesetzt werden.

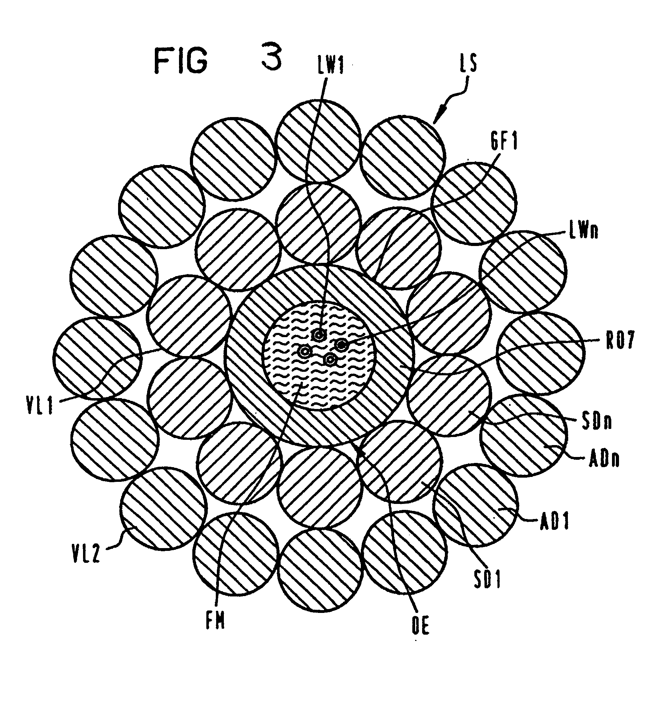

Figur 3 zeigt schematisch im Querschnitt ein Leitungsseil LS für Hochspannungsfreileitungen mit einem erfindungsgemäß hergestellten optischen Übertragungselement . Dieses Lichtwellenleiter- bestückte Metallröhrchen ist in der Figur 3 beispielsweise im Zentrum als Kernelement angeordnet. Über dem Röhrchen RO7 dieses optischen Übertragungselementes OE ist mindestens eine Lage von elektrisch leitenden Drähten aufgebracht. In der Figur 3 ist beispielsweise um das metallische Röhrchen RO7 herum mindestens eine erste Verseillage VL1 aus Stahl- oder Stalumdrähten ST1 mit STn aufgeseilt. Darüber ist mindestens eine äußere Verseillage VL2 mit Drähten AD1 mit ADn aufgeseilt, die gegenüber der Innenlage VL1 eine höhere Leitfähigkeit aufweisen. Dafür eignen sich insbesondere Aldrey- oder Aluminiumdrähte.

Zusammenfassend ausgedrückt wird ein solches erfindungsgemäßes optisches Übertragungselement vorzugsweise mit Verfahrenschritten z.B. in folgender zeitlicher Abfolge durchgeführt:
1. Ein Metallband wie z.B. MB wird zu einem Röhrchen wie z.B. RO3 entlang dem Formgebungsabschnitt FA geformt.
2. Mindestens ein Lichtwellenleiter wie z.B. LW1 wird erst bei oder nach Verlassen des Formgebungsabschnittes FA in das fertig geformte Röhrchen RO3 eingebracht. Dies wird vorzugsweise dadurch erreicht, daß das Röhrchen mit Füllmasse gefüllt wird und diese Füllmasse die Lichtwellenleiter LW1 mit LWn mit in das Röhrchen einschleppt.
3. Das fertig geformte Röhrchen O3 wird erst nach Verlassen des Formgebungsabschnittes FA in einem unmittelbar nachfolgenden Längungsabschnitt aufgeheizt und reversibel gestreckt ("thermische Elongation").
4. Schließlich wird das gelängte Röhrchen RO4 nach Verlassen des Längungsbereiches derart abgekühlt und entspannt, daß es verkürzt wird und der jeweilige Lichtwellenleiter wie z.B. LW1 mit einer definierten Überlänge in dem sich verkürzenden metallischen Röhrchen zu liegen kommt.

Beim Verschweißen des metallischen Röhrchens können sich in der Praxis jedoch Schwierigkeiten durch die erzeugte Schweißhitze ergeben. Es besteht so zum Beispiel die Gefahr, daß es zu einer unzulässig hohen thermischen Belastung und damit einer Materialschädigung oder gar einem teilweisen Verbrennen der Füllmasse und/oder der Kunststoffbeschichtung (= Coating) der Lichtwellenleiter kommt. Weiterhin ist der Schweißprozeß auch deshalb kritisch, weil durch die örtliche Überhitzung Wasserstoff freigesetzt werden kann. Solcher Wasserstoff kann beispielsweise aus feuchter Umgebungsluft, beim Aufschmelzen des Metalls des Röhrchens, aus der Füllmasse, aus der Kunststoffbeschichtung (= Coating) der Lichtwellenleiter, usw. ... frei werden. Würde solcher Wasserstoff gegebenenfalls mit in das Innere des fertig verschweißten, rundum dichten Röhrchens eingeschleppt werden, so würde er dort verbleiben und zu einem unerwünschten Anstieg der Übertragungsdämpfung der Lichtwellenleiter führen.

Der Erfindung liegt somit die Aufgabe zugrunde, eine Vorrichtung bereitzustellen, mit der ein metallisches Röhrchen, in das mindestens ein Lichtwellenleiter und/oder Füllmasse einbringbar sind, möglichst einwandfrei verschweißt werden kann. Dieses Problem wird in vorteilhafter Weise dadurch gelöst, daß im Schweißbereich mindestens ein gekühlter Festkörper vorgesehen ist, der das in Abzugsrichtung durchlaufende Röhrchen außen zur Kühlung kontaktiert.

Dadurch, daß im Schweißbereich mindestens ein gekühlter Pestkörper das Röhrchen kontaktiert, ist in vorteilhafter Weise bereits dort eine wirksame Kühlung des Röhrchens ermöglicht. Beeinträchtigungen der Herstellungsqualität des mit mindestens einem Lichtwellenleiter und/oder Füllmasse bestückbaren metallischen Röhrchens sind somit weitgehend vermieden.

Die Erfindung betrifft auch ein Verfahren zum Verschweißen der Bandkanten eines aus einem langgestreckten Metallband geformten Röhrchens, in das mindestens ein Lichtwellenleiter und/oder Füllmasse eingebracht werden, welches dadurch gekennzeichnet ist, daß das in Abzugsrichtung durchlaufende Röhrchen im Schweißbereich außen von mindestens einem gekühlten Pestkörper kontaktiert wird.

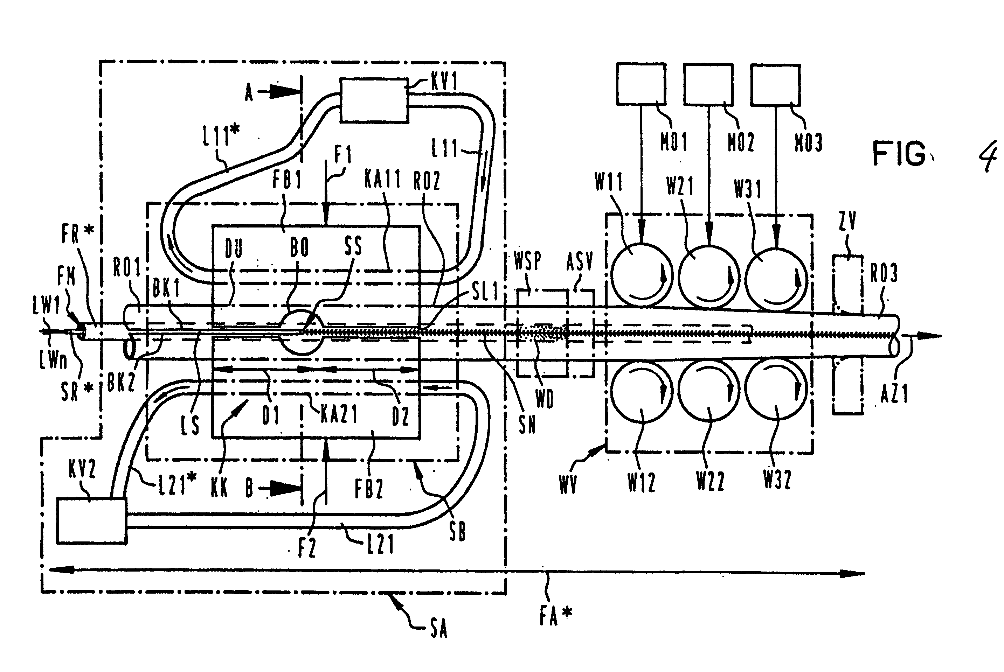

Figur 4 zeigt schematisch in Draufsicht den ausgangsseitigen Teil FA* des Formgebungsabschnitt einer Herstellungslinie für ein optisches Übertragungselement. Dieses optische Übertragungselement ist durch ein metallisches Röhrchen gebildet, in dessen Inneres mindestens ein Lichtwellenleiter und/oder Füllmasse einbringbar sind. Zunächst wird ein Metallband, wie zum Beispiel ein Stahl-, Edelstahl-, Kupfer-, Aluminiumband, oder dergleichen zu einem vorzugsweise etwa kreiszylinderförmigen Röhrchen wie z.B. RO1 entsprechend Figur 1 mit einem Längsschlitz LS (Längsschlitz- Röhrchen) vorgeformt. Die dazu erforderlichen Formwerkzeuge sind in der Figur 4 der Übersichtlichkeit halber weggelassen worden. Der Längsschlitz LS erstreckt sich vorzugsweise im wesentlichen geradlinig sowie parallel zur Zentralachse des Röhrchens RO1. In der Figur 4 verläuft der Längsschlitz LS im wesentlichen mittig auf der Oberseite des Röhrchens RO1. Entlang dem Längsschlitz LS stehen sich dabei die beiden Bandkanten BK1, BK2 des Röhrchens RO1 mit einander zugewandten Stirnseiten gegenüber.

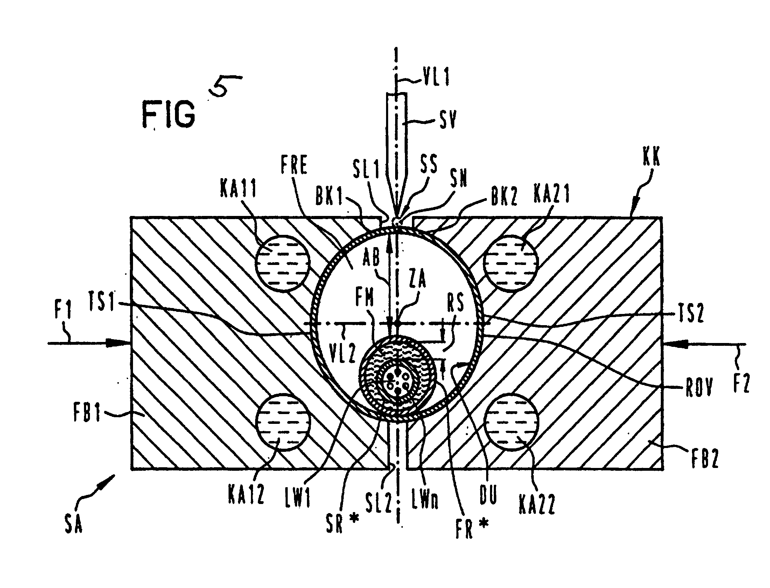

Um dann den Längsschlitz LS des Röhrchens RO1 zu verschließen und mit einer Schweißnaht SN zu versehen, wird das Röhrchen RO1 in der Figur 4 durch eine erfindungsgemäße Schweißanordnung wie z.B. SA (vgl. Figur 1) insbesondere im wesentlichen geradlinig in Abzugsrichtung AZ1 hindurchgeführt. Die Schweißanordnung SA von Figur 4 weist an ihrer Schweißstelle SS eine Schweißvorrichtung SV (siehe Figur 5 sowie im Schweißbereich SB um die eigentliche Schweißstelle SS herum einen vorzugsweise feststehend angeordneten Kühlkörper bzw. gekühlten Pestkörper KK auf, der das Röhrchen von außen kontaktiert und sich beidseitig der Schweißstelle SS des Röhrchens längserstreckt. Die Schweißvorrichtung SV ist dabei in der Figur 4 der zeichnerischen Übersichtlichkeit halber weggelassen worden. Das nach dem Schweißvorgang mit Hilfe der erfindungsgemäßen Schweißanordnung SA rundum verschlossene Röhrchen ist in der Figur 4 mit RO2 bezeichnet.

Dieses Röhrchen RO2 wird anschließend mit Hilfe einer der Schweißanordnung SA nachgeordneten Walzvorrichtung, vorzugsweise entsprechend WV von Figur 1, im Durchmesser reduziert und gelängt. Die Walzvorrichtung bzw. das Walzwerk WV weist dazu scheibenförmige, insbesondere etwa kreiszylinderförmige Walzen auf. Diese sind im Draufsichtsbild von Figur 4 lediglich schematisch beidseitig der Längserstreckung des vorzugsweise geradlinig durchlaufenden Röhrchens RO2 angedeutet und in Abzugsrichtung AZ1 gesehen mit W11, W21, W31 auf der einen Längsseite sowie mit W12, W22, W32 auf der gegenüberliegenden Längsseite des Röhrchens bezeichnet. In der Figur 4 korrespondieren dabei jeweils zwei Walzen auf gegenüberliegenden Seiten des Röhrchens RO2 zueinander, d.h. sie bilden jeweils ein Walzenpaar. Selbstverständlich kann es auch zweckmäßig sein, am jeweiligen Längsort mehr als zwei Walzen rings um den Außenumfang des Röhrchens RO2 anzuordnen. Die beiden Walzen des jeweilige Walzenpaares in der Figur 4 rollen auf gegenüberliegenden Teilhälften des Röhrchens RO2 an dessem Außenmantel ab. Im Draufsichtsbild von Figur 4 sind dies in Durchlaufrichtung bzw. Abzugsrichtung AZ1 betrachtet im einzelnen die Walzen der drei unmittelbar hintereinander angeordneten Walzenpaare W11/W12, W21/W22, W31/W32. Dem jeweiligen Walzenpaar W11/W12, W21/W22, W31/W32 ist vorzugsweise jeweils eine eigenständige Antriebsvorrichtung MO1 mit MO3, insbesondere ein Motor, zugeordnet. Jeweils zwei einander zugeordnete Walzen schließen dabei das durchlaufende Röhrchen RO2 zwischen sich ein und geben für dieses eine Durchgangsöffnung bestimmter. Querschnittsform vor. Vorzugsweise weisen die beiden aufeinander abrollenden Walzen des jeweiligen Walzenpaares in Durchlaufrichtung im Querschnitt betrachtet jeweils insbesondere eine etwa halbkreisförmige Ausnehmung bzw. Innenkontur(radial nach innen zum Walzenmittelpunkt) an ihrem Außenumfang auf. Auf diese Weise ist zwischen jeweils zwei aufeinander abrollenden Walzen ein etwa kreiszylinderförmiger Durchlaß bereitgestellt. Dessen Querschnittsform wird dem Röhrchen RO2 vorzugsweise durch radiale Querdruckpressung aufgeprägt bzw. aufgedrückt. Dabei wird das Material der Röhrchenwand radial nach innen (bezogen auf die Zentralachse des Röhrchens) gedrückt und unter Fließen plastisch verformt, d.h. queraxial, insbesondere radial gestaucht und dadurch der Innen- sowie der Außendurchmesser des Röhrchens reduziert. In Abzugsrichtung AZ1 betrachtet wird die Durchgangsöffnung zwischen zwei einander zugeordneten Walzen pro Walzenpaar schrittweise verkleinert und dadurch eine sukzessive Querschnittsreduzierung des Röhrchens RO2 erreicht. Die einander zugeordneten Walzen W21, W22 sind also näher an die Zentralachse des durchlaufenden Röhrchens RO2 herangerückt als das erste Walzenpaar W11/W12. Das dritte Walzenpaar W31/W32 weist gegenüber dem zweiten Walzenpaar W21/W22 schließlich eine Durchgangsöffnung auf, deren lichte Weite wiederum gegenüber dem Innendurchmesser der vorgegebenen Durchgangsöffnung des vorausgehenden, zweiten Walzenpaares W21/W22 verkleinert ist. Da die Abzugsgeschwindigkeit der Walzenpaare W11/W12, W21/W22, W31/W32 zugleich in Durchlauf richtung AZ1 sukzessive pro Walzenpaar zunimmt, wird am Röhrchen RO2 entlang der Walzstrecke gezogen und somit das Röhrchen gleichzeitig gelängt. Zweckmäßig kann es zum Beispiel sein, das Röhrchen pro Walzvorgang etwa um denselben Prozentsatz (bezogen auf seine Länge vor dem Walzvorgang) zu längen, wie es pro Walzvorgang in radialer Richtung (bezogen auf seinen Außendurchmesser vor dem Walzvorgang) gestaucht wird. Dadurch bleibt die Wanddicke des Röhrchens beim Walzen inbesondere im wesentlichen konstant. Beim Walzen wird somit insgesamt betrachtet durch das gleichzeitige Zusammenwirken von Querdruckpressung und Längung des Röhrchens eine Reduzierung der ringförmigen Wandquerschnittsfläche des Röhrchens RO2 erreicht.

Das mit Hilfe der Walzvorrichtung auf vorgebbare Endabmessungen gebrachte, d.h. fertig geformte, insbesondere etwa kreiszylinderförmige Röhrchen RO3 kann dann vorzugsweise weiteren Verarbeitungsstufen zur Kabelherstellung oder einer Vorratsspule zum Aufwickeln zugeführt werden, die in der Figur 4 der Übersichtlichkeit halber weggelassen worden sind.

Zweckmäßigerweise ist von der Eingangsseite des durchlaufenden Röhrchens RO1 her in dessen Inneres ein langgestrecktes, vorzugsweise etwa kreiszylinderförmiges Stützröhrchen SR* eingeführt, das feststehend angeordnet ist.

Funktion und Wirkungsweise dieses Stützröhrchens SR* entsprechen vorzugsweise im wesentlichen der des Stützröhrchens SR von Figur 1. Das Stützröhrchen SR* ist vorzugsweise längsortsfest angebracht. Es ist in der linken Bildhälfte von Figur 4 schematisch angedeutet. Es dient der Zuführung mindestens eines Lichtwellenleiters, hier insbesondere von mehreren Lichtwellenleitern LW1 mit LWn in das Röhrchen RO1 hinein. Es erstreckt sich in der Figur 4 im wesentlichen geradlinig zumindest über die Längserstreckung des Schweißbereiches SB der Schweißanordnung SA hinweg. Vorzugsweise ragt das Stützröhrchen SR* bis etwa zum Ausgang der Walzvorrichtung WV bzw. der etwaig nachfolgenden Ziehvorrichtung ZV in das Röhrchen hinein, um erst nach Beendigung des Walzvorganges mindestens einen Lichtwellenleiter in das fertig geformte Röhrchen RO3 einbringen zu können. Dieser Verlauf des Stützröhrchens SR* ist im Draufsichtbild von Figur 4 nicht sichtbar. Das Stützröhrchen SR* wirkt in vorteilhafter Weise einem seitlichen, insbesondere radialen Ausbrechen oder Ausknicken des jeweiligen Lichtwellenleiters LW1 mit LWn bezogen auf die Zentralachse des Röhrchens entgegen, da es für den jeweiligen Lichtwellenleiter einen definierten, insbesondere im wesentlichen geradlinigen Laufweg vorgibt. Es stellt also eine (bezogen auf die Längserstreckung des Röhrchens RO1) lateral, insbesondere radial wirksame Abstützung für die Lichtwellenleiter LW1 mit LWn bereit. Durch die Laufwegvorgabe mit Hilfe des Stützröhrchens SR* sind in vorteilhafter Weise definierte Verhältnisse zwischen der Produktionslänge des Röhrchens RO3 und der eingefahrenen Länge des jeweiligen Lichtwellenleiters weitgehend sichergestellt.

Um gegebenenfalls zusätzlich oder unabhängig von den Lichtwellenleitern LW1 mit LWn auch eine Füllmasse FM mit in das fertig geformte Röhrchen RO3 einbringen zu können, ist ein langgestrecktes Füllröhrchen FR* vorgesehen, das in das Innere des Röhrchens RO1 von der Eingangsseite her eingeführt ist. Funktion und Wirkungsweise dieses Füllröhrchens FR* entsprechen vorzugsweise im wesentlichen der des Füllröhrchens FR von Figur 1. Dieses Füllröhrchen FR* ist vorzugsweise längsortsfest angebracht. Es ist zweckmäßigerweise außen um das Stützröhrchen SR* herum mit Abstand derart angeordnet, daß zwischen dem Stützröhrchen SR* und dem Füllröhrchen FR* ein Ringspaltkanal gebildet ist. Das Füllröhrchen FR* verläuft zumindest über den Schweißbereich SB der Schweißanordnung SA hinweg. Sein im wesentlichen geradliniger Längsverlauf ist im Draufsichtbild von Figur 4 zusätzlich strichpunktiert angedeutet. Insbesondere umgibt das Führungsröhrchen FR* das Stützröhrchen SR* konzentrisch, so daß eine koaxiale Doppelanordnung von Stützröhrchen SR* und Füllröhrchen ER* gebildet ist. Vorzugsweise weist das Stützröhrchen SR* sowie das Füllröhrchen FR* eine im wesentlichen etwa kreiszylinderförmige Form auf, so daß sich zwischen ihnen ein im wesentlichen kreisringförmiger Ringspaltkanal RS ergibt (vergleiche Figur 5). Das ausgangsseitige Ende des Füllröhrchens FR* endet vorzugsweise vor dem ausgangsseitigen Ende des Stützröhrchens SR*, das heißt das Stützröhrchen SR* ragt mit seinem Ende über den Ausgang des Füllröhrchens FR* hinaus. Dadurch wird sichergestellt, daß in Abzugsrichtung AZ1 betrachtet zuerst die Füllmasse FM in das Röhrchen RO2 eingebracht wird, bevor die Lichtwellenleiter LW1 mit LWn hinzugegeben werden. Auf diese Weise ist es beispielsweise in vorteilhafter Weise ermöglicht, die Lichtwellenleiter LW1 mit LWn von der Füllmasse FM mit in das fertige Röhrchen RO3 hineinschleppen zu lassen. Das Füllröhrchen FR* erstreckt sich vorzugsweise bis etwa in die Mitte der Längserstreckung oder höchstenfalls bis zum Ausgang der Walzvorrichtung WV. Demgegenüber endet das Stützröhrchen SR* in Abzugsrichtung AZ1 betrachtet vorzugsweise erst später, wie z.B. nach dem Ausgang der Walzvorrichtung WV oder erst nach der ziehvorrichtung ZV. Mit Hilfe des Füllröhrchens FR* wird die Füllmasse FM zu einem Zeitpunkt in das Röhrchen RO2 eingebracht, bevor dieses auf seinen kleineren Enddurchmesser gebracht worden ist. Dadurch ist sichergestellt, daß die Füllmasse FM nach Vollendung des Walzvorganges und des gegebenenfalls anschließenden Ziehvorganges das Innere des fertig geformten Röhrchens RO3 im wesentlichen vollständig ausfüllt. Für das Stützröhrchen SR* und/oder das Füllröhrchen FR* ist zweckmäßigerweise ein Material oder eine Beschichtung hoher Temperaturfestigkeit verwendet, da das Stützröhrchen SR* sowie das Füllröhrchen FR* im Röhrchen RO1 unter der Schweißstelle SS hinweg geführt sind. Vorzugsweise ist für das Stützröhrchen SR* und/oder das Füllröhrchen FR* ein metallischer Werkstoff, insbesondere hartgezogener bzw. gehärteter Edelstahl gewählt.

Der gekühlte Festkörper KK der Schweißanordnung SA ist in der Figur 4 (siehe auch Figur 5) durch zwei separate Kühlblöcke FB1, FB2 gebildet, die das in Abzugsrichtung AZ1 durchlaufende Röhrchen RO1 von außen zwischen ihren Längsseiten zwingenartig einschließen. Die beiden Kühlblöcke FB1, FB2 sind vorzugsweise jeweils massiv ausgebildet und weisen jeweils annäherungsweise eine quaderförmige Gestalt auf. Sie bilden jeweils einen gekühlten Festkörper. Auf der Oberseite des Kühlkörpers bzw. gekühlten Festkörpers KK ist zwischen den Kühlblöcken FB1, FB2 ein im wesentlichen geradlinig verlaufender Längsspalt bzw. Längsschlitz SL1 freigehalten, der sich vorzugsweise über die gesamte Länge des Kühlkörpers KK hinweg erstreckt. Entlang diesem Längsspalt SL1 bleiben die beiden miteinander zu verschweißenden Bandkanten BK1, BK2 für den Schweißvorgang nach außen frei zugänglich. Korrespondierend zu diesem Längsspalt SL1 weist der Kühlkörper KK auf seiner Unterseite zwischen den beiden Kühlblöcken FB1, FB2 einen analog ausgebildeten Längsspalt SL2 auf, der im Draufsichtsbild von Figur 4 vorzugsweise etwa deckungsgleich zum Längsspalt SL1 verläuft und erst im Querschnittsbild von Figur 5 sichtbar ist. Bis auf die beiden, nach außen offen bleibenden Längsspalte SL1, SL2 kontaktieren die beiden Kühlblöcke FB1, FB2 das Röhrchen RO1 an dessem Außenumfang über die Längserstreckung des Schweißbereiches SB hinweg. Anders ausgedrückt weist der Kühlkörper KK somit eine Längsdurchführung bzw. Durchgangsöffnung DU vorgebbaren Querschnitts für das durchlaufende Röhrchen RO1 auf. Dabei verbleibt ein von oben nach unten durchgehender Längsspalt SL1/SL2 zwischen den beiden zweigeteilten Kühlblöcken KB1, KB2. Die Längsdurchführung DU zwischen den beiden Kühlblöcken FB1, FB2 ist in der Figur 4 strickpunktiert angedeutet. Zweckmäßigerweise kontaktiert der Kühlkörper KK mindestens 60 %, insbesondere zwischen 60 und 90 %, bevorzugt etwa 75% des Außenumfangs des metallischen Röhrchens.

Im Kühlkörper KK ist senkrecht zur Zeichenebene von Figur 4, d.h. auf der Oberseite des Kühlkörpers KK, eine vorzugsweise etwa kreiszylinderförmige Durchgangsbohrung BO zur Durchführung DU vorgesehen, um einen ausreichend großen Freiraum zum Verschweißen der beiden Bandkanten BK1, BK2 an der Schweißstelle SS bereitzustellen und die beiden aneinanderstoßenden Bandkanten BK1, BK2 des Röhrchens RO1 nach außen für die Schweißvorrichtung SV (vgl. Figur 5) frei zugänglich zu machen. Die Durchgangsbohrung BO ist in der Figur 4 in Abzugsrichtung AZ1 betrachtet nach einer vorgebbaren, eingangsseitigem Teilstreckenlänge D1, vorzugsweise etwa nach dem ersten Drittel der Längserstreckung des Kühlkörpers KK, in diesen eingelassen. Vorzugsweise weist der Kühlkörper KK eine Gesamtlängserstreckung D1+D2 zwischen 100 und 200 mm, insbesondere zwischen 100 und 120 mm auf. Die Bohrung BO weist vorzugsweise einen Abstand bzw. eine Teillänge D1 zwischen 30 und 50 mm von der (in Abzugsrichtung AZ1 betrachtet) eingangsseitigen Stirnseite des Kühlkörpers KK auf.

Auf diese Weise wird das Röhrchen RO1 mit Hilfe des Kühlkörpers KK somit (in Abzugsrichtung AZ1 betrachtet) bereits vor der eigentlichen Schweißstelle SS, im Nahbereich der Schweißstelle SS selbst sowie unmittelbar nach der Schweißstelle SS gekühlt. Dies ist überhaupt erst dadurch ermöglicht, daß die Außenwand des Röhrchens beidseitig dem Längsschlitz SL1 lediglich mit einem Feststoffkörper und nicht mit einer Kühlmittelflüssigkeit, wie zum Beispiel Wasser, kontaktiert wird. Denn beim festen Kühlkörper (=gekühlter Festkörper) KK verbleibt die Außenoberfläche des Röhrchens, insbesondere zumindest im Bereich des Längsschlitzes SL1 entlang der miteinander zu verschweißenden Bandkanten BK1, BK2 des Röhrchens, im wesentlichen sauber sowie trocken. Beim Hindurchziehen des Röhrchens durch den Kühlkörper KK werden zudem die miteinander zu verschweißenden Bandkanten BK1, BK2 des Röhrchens entlang dem Längsschlitz SL1 außen sowie innen nicht kontaktiert bzw. berührt, d.h. es findet kein Kontakt zwischen den miteinander zu verschweißenden Bandkanten BK1, BK2 bzw. der gebildeten Schweißnaht SN mit Bauteilen des Kühlkörpers KK oder des Füllröhrchens FR* statt, sondern die Bandkanten BK1, BK2 bzw. die Schweißnaht SN verbleiben an der Innen- sowie der Außenwand des Röhrchens unberührt. Damit sind Beeinträchtigungen des Schmelzbades der Schweißnaht SN - wie z.B. durch Zusätze bzw. Verunreinigungen mit Kühlmittelflüssigkeit, insbesondere Wassertröpfchen - sowie Störungen der Schweißatmosphäre - wie zum Beispiel durch Anreicherung mit Wasserdampf - von vornherein vermieden. Da das Röhrchen nicht nur nach der eigentlichen Schweißstelle, sondern bereits vor sowie an der eigentlichen Schweißstelle selbst vom Kühlkörper KK am Außenumfang kontaktiert wird, ist zudem insgesamt eine besonders große Kontaktierungsfläche zum Wärmeabtransport bereitgestellt und dadurch eine besonders effektive Kühlung ermöglicht. Unzulässige thermische Beanspruchungen der Füllmasse und/oder der Lichtwellenleiter LW1 mit LWn im Röhrchen bei dessen Hindurchführung durch den Schweißbereich SB hindurch sind somit weitgehend vermieden. Insbesondere kann das Röhrchen vor der eigentlichen Schweißstelle SS entlang dem eingangsseitigem Teilstreckenabschnitt D1 des Kühlkörpers KK vorgekühlt werden, ohne daß dabei seine Außenoberfläche, insbesondere im Bereich der miteinander zu verschweißenden Bandkanten BK1, BK2, naß bzw. feucht oder in sonstiger Weise verunreinigt wird. Das Schmelzbad der Schweißnaht SN des Röhrchens wird beim Hindurchziehen durch den Kühlkörper KK ausgehend von der Schweißstelle SS zumindest bis zu seinem Erstarren weder mit einer Kühlflüssigkeit noch in sonstiger Weise kontaktiert. Denn nach der Schweißstelle SS bleibt die Schweißnaht SS entlang dem ausgangsseitigem Teilstreckenabschnitt D2 des Längsschlitzes SL1 der Durchführung DU (des Kühlkörpers KK) nach außen frei zugänglich. Auf diese Weise ist eine Materialversprödung oder Oxidbildung entlang der gebildeten Schweißnaht SN weitgehend vermieden. Würde demgegenüber vor, an und/oder nach der Schweißstelle SS mit einem flüssigen Kühlmittel, wie z.B. mit Wasser in einem Kühlbecken, gekühlt werden, so käme es üblicherweise zu einer unerwünschten Materialversprödung oder sonstigen Schädigungen der Schweißnaht SN.

Insbesondere liegt der Kühlkörper KK mit einer trockenen Kontaktierungsfläche an der Röhrchenaußenwand an, d.h. das Röhrchen wird vorzugsweise im trockenen Zustand durch den Kühlkörper KK hindurchgezogen.

Aufgrund der Längsspalte SL1, SL2 zwischen den beiden Kühlblöcken FB1, FB2 ist es ermöglicht, diese mit einer vorgebbaren Querdruckkraft queraxial zur Längserstreckung des Röhrchens RO1 zusammenzupressen, was durch entgegengesetzt zueinander gerichtete Pfeile F1, F2 in der Figur 4 angedeutet ist. Die Querdruckpressung erfolgt dabei insbesondere in einer Ebene, die etwa senkrecht zur Längserstreckung des Röhrchens RO1 liegt und deren Vorzugsrichtung (im Querschnittbild von Figur 5 betrachtet) insbesondere durch das Zentrum ZA des Röhrchens RO1 sowie im wesentlichen parallel zur gedachten Verbindungslinie der sich gegenüberstehenden Bandkanten BK1, BK2 geht, d.h. etwa parallel zu derjenigen Tangente, die etwa durch die Schweißstelle SS in der Mitte zwischen den beiden Bandkanten BK1, BK2 am Außenumfang des Röhrchens RO1 verläuft. Im Querschnittsbild von Figur 5 ist diese Vorzugsrichtung für die Querdruckkräfte mit Hilfe einer strichpunktierten Geradenlinie VL2 angedeutet, die dort im wesentlichen waagrecht eingezeichnet ist. Durch die Querdruckpressung wird ein solcher Rohrfügespaltdruck für das Längsschlitzröhrchen RO1 erzeugt, daß dessen einander gegenüberstehenden Bandkanten BK1, BK2 zusammengedrückt werden, so daß sie bündig aneinanderstoßen und der Längsschlitz LS geschlossen wird. Die beiden Bandkanten BK1, BK2 des Röhrchens RO1 sind also im gekühlten Festkörper KK an der Schweißstelle SS auf Stoß zueinander gesetzt und berühren einander (siehe Figur 5. Die sich dann berührenden Bandkanten BK1, BK2 werden mit Hilfe der Schweißvorrichtung SV, insbesondere einer Schweißelektrode oder einem Laser, an der Schweißstelle SS miteinander verschweißt, so daß sich die Schweißnaht SN ausbildet. Zweckmäßigerweise ist zum Verschweißen des Röhrchens im Bereich außen um die Schweißstelle SS herum Schutzgas, insbesondere Edelgas wie z.B. Argon, Helium, usw. ..., verwendet, so daß eine Oxidbildung auf der erzeugten Schweißnaht SN weitgehend vermieden ist.

Werden die beiden Bandkanten BK1, BK2 des Röhrchens RO1 an der Schweißstelle SS unter Bildung der Schweißnaht SN miteinander verschweißt, so bleibt die Schweißnaht SN aufgrund des Längsspalts SL1 hindurch nach außen frei zugänglich. Dadurch wird in vorteilhafter Weise weitgehend vermieden, daß das flüssige Schmelzbad der Schweißnaht SN beim weiteren Hindurchziehen des Röhrchens durch den Kühlkörper KK nachträglich abgerieben oder in sonstiger unzulässiger Weise gestört oder gar beschädigt wird. Der Kühlkörper KK kommt also entlang dem Längsschlitz SL1 mit der Schweißnaht SN des Röhrchens nicht in Berührung, so daß das flüssige Schmelzbad der Schweißnaht SN weitgehend unbeeinflußt erstarren kann. Auch nach innen hin hat die Schweißnaht SN keinen Kontakt zu Bauteilen des Kühlkörpers KK oder zum Füllröhrchen FR* (siehe Figur 5). Weiterhin wird durch den Längsspalt SL1 auch das Wiederanfahren der Herstellungslinie erleichtert. Denn die der Schweißstelle SS zugeordnete Schweißvorrichtung SV kann zum Anfahren zweckmäßigerweise einem Längsort zugeordnet werden, der in Abzugsrichtung AZ1 nach der Schweißstelle SS liegt und an dem vor dem Stoppen der Herstellungslinie schon eine Schweißnaht gebildet wurde. Auf diese Weise ist eine lückenlose Verschweißung in einfacher Weise ermöglicht. Dadurch, daß der zu verschweißende Längsschlitz LS des Röhrchens RO1 beim Hindurchführen durch die Schweißanordnung SA obenauf, d.h. auf der Oberseite des Röhrchens RO1 liegt, ist zudem ein Verlaufen des aufgeschmolzenen Metalls des flüssigen Schmelzbades an der Schweißstelle SS in Umfangsrichtung der Außenoberfläche des Röhrchens weitgehend vermieden. Auf diese Weise ist somit Materialverlusten und einer daraus resultierenden, unzulässigen Wandstärkenverminderungen entlang der Schweißnaht weitgehend entgegengewirkt.

Figur 5 zeigt schematisch im Querschnitt die Schweißanordnung SA nach Figur 4 bei einem Schnitt entlang der Schnittlinie AB durch die Bohrung BO senkrecht zur Zeichenebene von Figur 4 sowie mit Blickrichtung in Abzugsrichtung AZ1. In der Figur 5 ist zusätzlich eine gedachte Verbindungsgerade VL1 strichpunktiert eingezeichnet, die durch die Schweißnaht SN etwa in der Mitte des Längsspalts SL1 auf der Oberseite des Röhrchens und durch eine dazu um etwa 180° am Außenumfang versetzten Stelle in der Mitte des Längsspaltes SL2 auf der Unterseite des Röhrchens verläuft. Beidseitig dieser - in der Figur 5 vertikal durch das Zentrum des Röhrchens verlaufenden - gedachten Symmetrie- bzw. Verbindungsgeraden VL1 sind die beiden Kühlblöcke FB1, FB2 jeweils im wesentlichen einer Teilhälfte des Außenumfangs des Röhrchens zugeordnet. Im einzelnen ist der Kühlblock FB1 in Abzugsrichtung AZ1 betrachtet der linken Hälfte des Röhrchens sowie der Kühlblock FB2 dessen rechter Teilhälfte zugeordnet. Die beiden Kühlblöcke FB1, FB2 sind jeweils an ihrer dem Röhrchen zugewandten Seite halbschalenförmig ausgebildet, das heißt sie weisen jeweils eine Ausnehmung TS1 bzw. TS2 vorgebbarer Innenkontur auf, die das Röhrchen jeweils beidseitig der gedachten Verbindungsgeraden VL1 umfassen. Die beiden Kühlblöcke FB1, FB2 sind derartig gegenüberliegend am Außenumfang des Röhrchens angeordnet, daß die gedachte, strichpunktiert eingezeichnete Verbindungsgerade VL2 der Mitten ihrer Ausnehmungen TS1, TS2 senkrecht zur gedachten Verbindungsgeraden VL1 im Querschnittsbild von Figur 5 verläuft. Dort ist die Schweißnaht SN etwa der Zwölf-Uhr-Position am Außenumfang des Röhrchens zugeordnet, während die Mitten der Ausnehmungen TS1, TS2 um 90° dazu versetzt sind. Im einzelnen ist die Mitte der Ausnehmung TS1 in etwa der Neun-Uhr-Position sowie die Mitte der Ausnehmung TS2 etwa der Drei-Uhr-Position zugeordnet. Die Innenkontur der Ausnehmung TS1 sowie die Innenkontur der Ausnehmung TS2 sind jeweils vorzugsweise in Form eines Teilkreisabschnittes ins Innere des zugehörigen Kühlblocks FB1, FB2 hinein gewölbt. Auf diese Weise ergeben die beiden Kühlblöcke FB1, FB2 zusammengesetzt eine Durchgangsöffnung vorgebbaren Querschnitts, insbesondere mit einer ellipsenartigen bzw. hochovalen Querschnittsform für das durchlaufende Röhrchen vor. Die beiden Kühlblöcke FB1, FB2 werden queraxial bezüglich der Längserstreckung des in Abzugsrichtung AZ1 durchlaufenden Röhrchens mit einer Kraftvorzugsrichtung entlang der gedachten Verbindungsgeraden VL2 zusammengepreßt, was durch die entgegengesetzt zueinander gerichteten Pfeile F1, F2 angedeutet ist. Da die Kühlblöcke FB1, FB2 die beiden Teilhälften des Röhrchens beidseitig der Schweißnaht SN zusammenpressen, wird das Röhrchen beidseitig der gedachten Verbindungslinie VL1 zusammengequetscht bzw. zusammengestaucht, so daß sich eine längliche Querschnittsform für das Röhrchen ergibt, d.h. die Kühlblöcke FB1, FB2 wirken zugleich auch als Formblöcke. Entlang der gedachten Verbindungslinie VL1 weist das in der Schweißanordnung durch Querdruckpressung plastisch verformte Röhrchen somit eine größere Erstreckung als entlang der gedachten Verbindungslinie VL2 auf, das heißt mit anderen Worten, daß das Röhrchen höher als breit verformt wird. Aufgrund der ausgeübten Querdruckkräfte mittels der Kühlblöcke FB1, FB2 auf die Außenwände beidseitig der Schweißnaht SN des zuvor im wesentlichen kreiszylinderförmigen Röhrchens wird dieses zu einem hochovalen Röhrchen ROV umgeformt bzw. gedrückt. Die ovalförmige Form des Röhrchens ROV wird also insbesondere dadurch erzeugt, daß die Formblöcke FB1, FB2 eine Querdruckkraft mit Vorzugsrichtung entlang der gedachten, im Querschnittsbild von Figur 5 etwa waagrecht verlaufenden Verbindungslinie VL2 auf die Außenwand des Röhrchens ROV aufbringen. Diese Querdruckkraft entlang der Verbindungslinie VL2 wirkt dabei in radialer Richtung nach innen auf die Zentralachse des Röhrchens ROV zu. Da die beiden Kühlblöcke FB1, FB2 mit ihren einander zugewendeten Längsseiten im wesentlichen satt, d.h. insbesondere formschlußartig am Außenumfang des hochoval geformten Röhrchens ROV anliegen, ergibt sich ein besonders effektiver Wärmeübergang vom Röhrchen ROV auf den Kühlkörper KK, so daß die Schmelzwärme von der Schweißstelle SS zielgerichtet an den Kühlkörper KK abgeführt wird. Zweckmäßigerweise ist für die Formblöcke FB1, FB2 ein Material mit besonders hoher Wärmeleitfähigkeit wie z.B. ein metallischer Werkstoff gewählt. Zweckmäßigerweise ist für den Kühlkörper KK ein Material verwendet, das eine hohe Trockengleiteigenschaft aufweist, d.h. besonders reibungsarm ist, so daß ein Festfressen des Röhrchens beim Hindurchziehen durch die Durchgangsöffnung DU des Kühlkörpers KK weitgehend vermieden ist. Gegebenenfalls -kann.es zur Verminderung der Reibung zwischen Kühlkörper KK und Röhrchen auch zweckmäßig sein, die Kontaktierungsfläche des Kühlkörpers KK mit einem Schmiermittel zu versehen, während das Röhrchen entlang dem Längsschlitz SL1 sauber bleibt.

Dadurch, daß im Schweißbereich mindestens ein fester Kühlkörper (= gekühlter Festkörper) das Röhrchen kontaktiert, ist bereits dort eine wirksame Kühlung des Röhrchens ermöglicht. Beeinträchtigungen der Herstellungsqualität des mit mindestens einem Lichtwellenleiter und/oder Füllmasse bestückten metallischen Röhrchens sind somit weitgehend vermieden. So ist zum Beispiel einer thermischen Überhitzung sowie einer etwaig damit verbundenen Materialschädigung der Kunststoffbeschichtung (= Coating) des Lichtwellenleiters und/oder der Füllmasse bereits dort entgegengewirkt, wo die größte Schweißhitze auftritt. Auch ist die Freisetzung von Wasserstoff durch Abspaltung wie beispielsweise aus der Füllmasse, der Kunststoffbeschichtung (=Coating) des jeweiligen Lichtwellenleiters, etwaig feuchter Umgebungsluft, dem aufgeschmolzenen Metall an der Schweißstelle SS des Röhrchens, usw. ... verringert, d.h. weit weniger möglich. Da lediglich ein gekühlter, trockener Feststoffkörper - und nicht eine Kühlmittelflüssigkeit wie z.B. Wasser - das Röhrchen im trockenen Zustand kontaktiert, sind Störungen der Schweißatmosphäre, wie z.B. durch Anreicherung mit Wasserdampf oder Wasserstoff, sowie Beeinträchtigungen des flüssigen Schmelzbades im Bereich der Schweißstelle SS weitgehend vermieden. Erst der feste Kühlkörper ermöglicht es deshalb, das Röhrchen (in Abzugsrichtung betrachtet) auch bereits vor der eigentlichen Schweißstelle, sogar an der Schweißstelle selbst und/oder unmittelbar nach der Schweißstelle einwandfrei kühlen zu können, wobei das Schmelzbad der Schweißnaht selbst unberührt bleibt. Insbesondere sind eine Materialversprödung sowie sonstige Beeinträchtigungen der Schweißnaht weitgehend vermieden, da das flüssige Schmelzbad im Schweißbereich SB vor, an und/oder nach der eigentlichen Schweißstelle SS selbst mit einem flüssigen Kühlmittel nicht unmittelbar in Berührung kommt, sondern weitgehend unbeeinflußt erstarren kann.

In der Figur 5 erstreckt sich das Füllröhrchen FR* mit dem in ihm vorzugsweise etwa zentrisch angeordneten Stützröhrchen SR* entlang derjenigen Innenwand des ovalförmigen Röhrchens ROV, die der Schweißnaht SN um etwa 180° gegenüberliegt, das heißt das Füllröhrchen FR* läuft im Querschnittsbild von Figur 5 am Boden des Röhrchens ROV im Bereich der sechs-Uhr-Position entlang. Dadurch verbleibt auch das Schmelzbad der Schweißnaht SN von innen her unbeeinflußt, d.h. ohne Kontakt zum Füllröhrchen FR*. Durch die hochovale Form des Röhrchens ROV ist der Abstand AB zwischen der Schweißnaht SN und dem Füllröhrchen FR* entlang der Verbindungslinie VL1 gegenüber einem kreiszylinderförmig geformten Röhrchen vergrößert. Der Abstand AB zwischen dem Füllröhrchen FR* und der Schweißnaht SN ist zweckmäßigerweise mindestens gleich 0,5 mm, vorzugsweise zwischen 0,5 und 3 mm gewählt. Dadurch, daß das metallische Röhrchen ROV im Schweißbereich SB der Schweißanordnung SA von Figur 4 hochoval geformt wird, das heißt dann höher als breit ist, ist also ein besonders großer Abstand zwischen dem Füllröhrchen FR* und der Schweißstelle SS mit der Schweißeinrichtung SV sichergestellt. Das Füllröhrchen FR* umgibt das Stützröhrchen SR* mit Abstand derart, daß zwischen der Außenberandung des Stützröhrchens SR* und der Innenberandung des Füllröhrcbens FR* der Ringspaltkanal RS zur Zufuhr der Füllmasse FM gebildet ist. Vorzugsweise ist als Füllmasse FM ein thixotropes, weiches, pastenartiges Material gewählt, um das fertige Röhrchen RO3 weitgehend längswasserdicht machen zu können. Der Ringspaltkanal RS ist im wesentlichen kreisringförmig ausgebildet. Er weist somit in Umfangsrichtung betrachtet eine im wesentlichen konstante Spaltbreite auf. Die Spaltbreite des Ringspaltkanals RS wird vorzugsweise mindestens gleich 0,2 mm, vorzugsweise zwischen 0,2 und 1 mm gewählt. Besonders zweckmäßig kann es gegebenenfalls auch sein, das Stützrohr SR* am Boden des Füllröhrchens FR* entlang laufen zu lassen, so daß es besonders weit von der Schweißnaht SN bzw. der Schweißstelle SS entfernt ist. Der Spaltraum FRE zwischen der Außenwand des Füllröhrchens FR* und der Innenwand des Röhrchens ROV ist vorzugsweise mit Schutzgas, insbesondere Edelgas, im Schweißbereich SB gefüllt. Durch diese Schutzgasspülung im Inneren des Röhrchens ist in vorteilhafter Weise einer Oxidbildung an der Innenseite der Schweißnaht SN weitgehend entgegengewirkt. Weiterhin ist dadurch auch weitgehend vermieden, daß etwaig an der Schweißstelle SS freigesetzter Wasserstoff von außen mit in das Röhrchen in Abzugsrichtung AZ1 eingeschleppt wird.

Die Schweißanordnung SA stellt im Schweißbereich SB somit in vorteilhafter Weise zusätzlich zur aktiven Kühlung mit Hilfe des Kühlkörpers KK von außen auch Mittel zur thermischen Isolierung bzw. Abschirmung der Füllmasse FM und/oder der Lichtwellenleiter LW1 mit LWn im Inneren des durchlaufenden Röhrchens bereit. Im einzelnen wird eine thermische Abschirmwirkung nach Innen für die Füllmasse FM und/oder der Lichtwellenleiter LW1 mit LWn vorzugsweise durch folgende Maßnahmen bewirkt:

Der Innendurchmesser des zu verschweißenden Röhrchens RO1 wird vorzugsweise größer als der Innendurchmesser des fertig geformten Röhrchens RO3 von Figur 4 gewählt. Vorzugsweise wird der Innendurchmesser des zu schweißenden Röhrchens RO1 mindestens 10 % größer, vorzugsweise um etwa 50% größer als der Innendurchmesser des Röhrchens RO3 nach dem Walzvorgang bzw. der anschließenden Querschnittsreduzierung mit der Ziehvorrichtung ZV gewählt.

Zusätzlich oder unabhängig hiervon wird das Röhrchen RO1 zwischen den beiden Formblöcken FB1, FB2 im Schweißbereich SB zu einem hochovalen Röhrchen geformt bzw. gedrückt, um einen möglichst großen Abstand AB der Schweißstelle SS zum Füllröhrchen FR* mit der Füllmasse FM zu erreichen. Dadurch, daß das Füllröhrchen FR* am Boden des hochoval geformten Röhrchens ROV auf der der Schweißstelle SS gegenüber liegenden Innenwand des Röhrchens ROV in Abzugsrichtung AZ1 verläuft, wird der Abstand zwischen der Schweißstelle SS und den thermisch empfindlichen Materialien noch weiter vergrößert. Je weiter das Füllröhrchen FR* mit dem Stützröhrchen SR* von der Schweißstelle SS entfernt ist, desto stärker klingt die thermische Hitzestrahlung ausgehend von der Schweißnaht SN ab. Damit übernimmt der Spaltraum FR*E die Funktion einer ersten thermischen Abschirmlage bzw. Abschirmhülle.

Von außen nach innen betrachtet bildet die Ummantelung des Füllröhrchens FR* eine zweite thermische Barriere bzw. Hitzesperre, so daß die Füllmasse FM im Schweißbereich SB thermisch weitgehend abgeschirmt ist. Unzulässig hohe thermische Beanspruchungen, Überhitzungen sowie daraus etwaig resultierende Materialschädigungen der Füllmasse FM sind dadurch weitgehend vermieden. Dadurch behält die Füllmasse FM ihre charakteristischen Materialeigenschaften wie z.B. hohe Viskosität, pastenartige Konsistenz, usw. im wesentlichen bei. Auch ist dadurch einer Wasserstoff- Freisetzung aus der Füllmasse PM weitgehend entgegengewirkt. Durch den Spaltraum FR*E sowie der metallischen Ummantelung des Füllröhrchens FR* ist somit eine zweischichtige thermische Isolierhülle für die Füllmasse FM gebildet. Insbesondere ist durch die Kombination von Spaltraum FR*E und Füllröhrchen FR* ein Temperaturabfall von etwa 800 °C bis 1200° C, insbesondere um etwa 1000°C ermöglicht. Während die Bandkanten z.B eines Edelstahl-Röhrchens ROV an der Schweißstelle vorzugsweise auf Temperaturen bis etwa 1500 °C aufgeheizt werden können, wird die Füllmasse FM insbesondere höchstens noch bis auf 300°C erwärmt. Zweckmäßig kann es gegebenenfalls auch sein, das Füllröhrchen FR* zusätzlich zu kühlen.

Die Füllmasse FM wiederum wirkt selbst als thermische Abschirmung für die Lichtwellenleiter LW1 mit LWn im Stützröhrchen SR*. Dazu wird die Füllmasse FM vorzugsweise mit Raumtemperatur, insbesondere gekühlt in den Ringspaltkanal RS eingepumpt. Die Füllmasse FM wirkt also als weitere, dritte thermische Barriere von außen nach innen betrachtet, die für einen weiteren Temperaturabfall sorgt. Da das Stützröhrchen SR* innerhalb der Füllmasse FM des Füllröhrchens FR* eingebettet ist, ist für die Lichtwellenleiter LW1 mit LWn durch die Ummantelung des Stützröhrchens SR* eine vierte thermische Isolierschicht bereitgestellt. Auf diese Weise ist für die Lichtwellenleiter LW1 mit LWn eine mehrschichtige, insbesondere vierschichtige thermische Isolierung und damit eine besonders wirkungsvolle thermische Abschirmung gebildet. Etwaig unzulässig hohe thermische Beanspruchungen oder eine Überhitzung des Kunststoff- Beschichtungmaterials (=Coating) der Lichtwellenleiter sind dadurch weitgehend vermieden. Insbesondere ist dadurch auch einer Wasserstoffabspaltung zum Beispiel aus dem Coating-Material der Lichtwellenleiter weitgehend entgegengewirkt. Während an der Schweißstelle SS das Röhrchen ROV insbesondere auf Temperaturen bis etwa 1500 °C aufgeheizt werden kann, werden die Lichtwellenleiter LW1 mit LWn in vorteilhafter Weise höchstens noch bis auf etwa 200° C erwärmt. Zweckmäßig kann es gegebenenfalls sein, das Stützröhrchen zusätzlich zu kühlen.

Dadurch, daß zum einen das Röhrchen selbst am Außenumfang beidseitig der Schweißnaht SN entlang dem Schweißbereich SB gekühlt wird, zum anderen auch noch gegebenenfalls thermisch abschirmende Zuführungen im Inneren des Röhrchens für die Füllmasse FM und/oder die Lichtwellenleiter bereitgestellt sind, wird einer Freisetzung von Wasserstoff aus der Füllmasse und/oder der Kunststoffbeschichtung der Lichtwellenleiter besonders zuverlässig entgegengewirkt. Dadurch sind Dämpfungserhöhungen der Lichtwellenleiter LW1 mit LWn im fertigen Röhrchen RO3 weitgehend vermieden. Da das Füllröhrchen FR* für die Füllmasse FM sowie das Stützröhrchen SR* für die Lichtwellenleiter LW1 mit Lwn im Inneren des Röhrchens jeweils eine separate, hermetisch abgeschlossene Zuführung zumindest über den Schweißbereich SB hinweg bildet, ist auch ein Einschleppen von etwaig außerhalb freigesetzten Wasserstoffs in das Innere des fertigen Röhrchens RO3 hinein weitgehend vermieden.

Ohne solche Schutzmaßnahmen würde es hingegen zu Schwierigkeiten aufgrund der Schweißhitze kommen, weil durch die Hitze im Bereich der Schweißstelle das Innere des Röhrchens mit den Lichtwellenleitern und/oder der Füllmasse zu stark thermisch beansprucht oder gar geschädigt werden würde. So würde zum Beispiel die Gefahr bestehen, daß es zu einer unzulässig hohen thermischen Belastung und damit einer Materialschädigung oder gar einem teilweisen Verbrennen der Füllmasse und/oder der Kunststoffbeschichtung (= Coating) der Lichtwellenleiter kommt. Weiterhin wäre der Schweißprozeß auch deshalb kritisch, weil durch die örtliche Überhitzung Wasserstoff freigesetzt werden kann. Solcher Wasserstoff könnte beispielsweise aus der feuchten Umgebungsluft, beim Aufschmelzen des metallischen Röhrchens, aus der Füllmasse und/oder der Kunststoffbeschichtung der Lichtwellenleiter frei werden. Weiterhin könnte es auch vorkommen, daß durch die beim Schweißen entstehende, harte UV-Strahlung auch Elektronenbindungen in der Füllmasse und/oder dem Kunststoffmaterial der Lichtwellenleiter aufgebrochen werden und dadurch Wasserstoff frei wird. Würde solcher Wasserstoff gegebenenfalls mit in das Innere des fertig verschweißten, rundum dichten Röhrchens eingeschleppt, so würde er dort verbleiben und zu einem unerwünschten Anstieg der Übertragungsdämpfung der Lichtwellenleiter führen.

In der Praxis sind für die Verschweißung des metallischen Röhrchens insbesondere folgende Maßnahmen zweckmäßig, die jeweils einzeln für sich oder in beliebiger Kombination miteinander für die erfindungsgemäße Schweißanordnung verwendet sein können:
1. Für das zu verschweißende Röhrchen RO1 von Figur 4 wird zweckmäßigerweise ein wesentlich größerer, insbesondere um etwa 50% größerer Durchmesser als für das fertig geformte Röhrchen RO3 gewählt. Die Durchmesserreduzierung erfolgt dabei insbesondere durch Walzen und/oder Ziehen mit der Walzeinrichtung WV von Figur 1 bzw. 4 und/oder der Ziehvorrichtung ZV.
2. Für den Schweißprozeß wird das Röhrchen RO1 vorzugsweise hochoval geformt bzw. gedrückt, um einen relativ großen Abstand AB zu den thermisch empfindlichen Materialien wie der Füllmasse FM und/oder den Lichtwellenleiter LW1 mit LWn zu erreichen.
3. Das Röhrchen ROV wird zweckmäßigerweise im Bereich der Schweißstelle SS durch wassergekühlte Endformstücke wie z.B. FB1, FB2 von außen her annäherungsweise rundum gekühlt. Diese Formblöcke werden insbesondere mit entsprechendem Druck (vgl. F1, F2) gegen das Röhrchen ROV gepreßt, um in vorteilhafter Weise möglichst viel Schmelzwärme abführen, und zugleich den für den Schweißprozeß erforderlichen Rohrfügespaltdruck zwischen den beiden Bandkanten BK1, BK2 des Röhrchens ROV erzeugen zu können.
4. Die thermisch empfindlichen Materialien wie zum Beispiel die Füllmasse FM und/oder die Lichtwellenleiter LW1 mit LWn werden zweckmäßigerweise durch Schutzröhrchen wie zum Beispiel das Füllröhrchen FR* und/oder das Stützröhrchen SR* thermisch abgeschirmt sowie vorzugsweise zusätzlich mit möglichst großem Abstand AB im metallischen Röhrchen ROV unter der Schweißstelle SS vorbeigeführt.

Im Inneren des jeweiligen Kühlblockes FB1, FB2 ist zweckmäßigerweise jeweils mindestens ein Kühlkanal für eine Kühlmittelflüssigkeit eingelassen. Im Draufsichtsbild von Figur 4 ist beispielhaft für den Kühlblock FB1 der Kühlkanal KA11, für den Formblock FB2 beispielhaft der Kühlkanal FB2 strichpunktiert angedeutet. Der jeweilige Kühlkanal wie z.B. KA11 bzw. KA21 erstreckt sich vorzugsweise etwa parallel zur Längsachse des durchlaufenden Röhrchens RO1. Er ist jeweils in vorgebbarem Abstand zur Kontaktierungsfläche seines zugehörigen Kühlblockes angeordnet, mit der dieser am Außenumfang des Röbrchens anliegt. Jeder Kühlkanal wie z.B. KA11 des Kühlblocks FB1 ist an eine Kühlvorrichtung KV1 über eine Zuführleitung L11 angeschlossen, die ihn mit einer Kühlflüssigkeit, insbesondere Wasser, versorgt. Die durch den Schweißvorgang an der Schweißstelle SS erzeugte Wärme bzw. Hitze wird von dem metallischen Röhrchen RO1 unmittelbar auf die Kühlblöcke FB1, FB2 übertragen. Denn das Röhrchen RO1 ist im Schweißbereich SB zwischen den beiden Seitenwänden der Kühlblöcke FB1, FB2 queraxial eingespannt, wobei die Kühlblöcke FB1, FB2 das Röhrchen RO1 vorzugsweise enganliegend zwischen sich einschließen und formschlußartig kontaktieren. Dadurch wird ein hoher Wärmeübergang von dem durch den Schweißvorgang an der Schweißstelle SS aufgeheizten Röhrchen RO1 auf die Kontaktierungsflächen der Kühlblöcke FB1, FB2 bewirkt. Mit Hilfe des Kühlmittels im jeweiligen Kühlkanal wie z.B. KA11 wird die Schweißhitze aus dem Kühlblock FB1 über eine Leitung L11* nach außen an eine Kühlvorrichtung KV1 vorzugsweise fortlaufend abgeführt, wo das aufgeheizte Kühlmittel wieder abgekühlt wird. Auf diese Weise sorgt der Kühlkanal KA1 für einen ständigen Wärmeabtransport aus dem Formblock FB1. Gleiches gilt analog für jeden Kühlkanal wie z.B. KA21 im Formblock FB2. Der Kühlkanal KA21 ist im Draufsichtsbild von Figur 4 über eine Zuführleitung L21 mit einer separaten Kühlvorrichtung KV2 verbunden. Das aufgeheizte Kühlmittel wird dabei über eine Leitung L21* aus dem Form- bzw. Kühlblock FB2 der Kühlvorrichtung KV2 zur fortlaufenden Abkühlung zugeführt. Zweckmäßig kann es gegebenenfalls auch sein, die Kühlkanäle der beiden Formblöcke FB1, FB2 sowie deren zugehörige Zuführsowie Abführleitungen jeweils mit einer einzigen, gemeinsamen Kühlvorrichtung zu verbinden und gemeinsam umzuwälzen.

Im Querschnittsbild von Figur 5 weist das Innere des Kühlblocks FB1 neben dem Kühlkanal KA11 noch zusätzlich den Kühlkanal KA12 auf. Während der Kühlkanal KA11 der oberen Hälfte des Kühlblocks FB1 zugeordnet ist, ist der Kühlkanal KA12 in der unteren Hälfte des Kühlblocks FB1 eingelassen. Der Kühlblock FB2 weist analog dazu neben dem Kühlkanal KA21 in seiner oberen Teilhälfte auch noch einen Kühlkanal KA22 in seiner unteren Teilhälfte auf. Die vier Kühlkanäle erstrecken sich jeweils vorzugsweise parallel zueinander über die Längserstreckung des Kühlkörpers KK hinweg (vgl. Figur 4).

Die beiden Kühlblöcke FB1, FB2 sind bezüglich der gedachten Verbindungsgeraden VL1 insbesondere achssymmetrisch ausgebildet.

Selbstverständlich kann es gegebenenfalls auch zweckmäßig sein, mehr als zwei Kühlblöcke zu einem Kühlkörper mit einer Durchgangsöffnung vorgebbaren Innenquerschnittsform unter Querdruck zusammenzusetzen, die dem durchlaufenden Röhrchen aufgeprägt wird. Weiterhin kann es gegebenenfalls auch ausreichend sein, lediglich einen einstückig ausgebildeten, massiven Kühlkörper vorzusehen, der eine Durchgangsöffnung vorgebbaren Innenquerschnitts aufweist. Dazu kann sich die Durchgangsöffnung in Durchlaufrichtung zweckmäßigerweise konisch verjüngen.

Nach Erstarren des Schmelzbades der Schweißnaht SN kann es gegebenenfalls zweckmäßig sein, die noch glühend heiße Schweißnaht SN nach Verlassen des Kühlkörpers KK zusätzlich mit einem flüssigen Kühlmittel, insbesondere Wassertröpfchen zu bespritzen. Dazu ist zwischen der Schweißanordnung SA und der nachfolgenden Walzvorrichtung WV zusätzlich eine Kühlvorrichtung WSP vorgesehen, die in der Figur 4 strichpunktiert angedeutet ist. Sie dient insbesondere dem Benetzen bzw. Besprühen der bereits erstarrten, noch glühend heißen Schweißnaht SN mit einer Kühlmittelflüssigkeit, insbesondere mikroskopisch kleinen Wassertröpfchen. Erst nach dem Erstarren des Schmelzbades der Schweißnaht SN wird diese selbst zweckmäßigerweise so weit abgekühlt, daß die Außenoberfläche der Schweißnaht SN Anlauffarben bildet. Dadurch ist in vorteilhafter Weise einer Oxidschichtbildung auf der Schweißnaht entgegengewirkt. Der gebildete Wasserdampf wird anschließend mit Hilfe einer unmittelbar nachfolgenden Absaugvorrichtung ASV von der Außenoberfläche des Röhrchens möglichst vollständig abgesaugt. Diese Absaugvorrichtung ASV ist in der Figur 4 ebenfalls strichpunktiert angedeutet.

Eine Schweißanordnung nach dem aufgezeigten Prinzip wie z.B. SA läßt sich in vorteilhafter Weise selbstverständlich auch in anderen als den in den Figuren 1 mit 5 gezeigten Herstellungslinien für Lichtwellenleiter- bestückte Metallröhrchen einsetzen.

Bei der Fertigung von Metallröhrchen, die jeweils mit mindestens einem Lichtwellenleiter bestückt'sind, ist in der Praxis insbesondere die Längsverschweißung deren Bandkanten kritisch. So kann es beispielsweise bei zu ungenauer Führung des Röhrchens im Schweißbereich zu unzulässigen Störungen bzw. Beeinträchtigungen des Schmelzbades der Längsschweißnaht zwischen den beiden Bandkanten des Rörchens kommen. Weiterhin kann die beim Schweißprozess abgegebene Schweißwärme zu einer Überhitzung des Röhrchens und damit der dort eingebrachten Lichtwellenleiter und/oder Füllmasse führen.

Ein weiteres Problem besteht somit insbesondere darin, wie beim Verschweißen eines metallischen Röhrchens dessen Schweißnaht einwandfrei ausgebildet und zugleich eine Überhitzung des Röhrchens weitgehend vermieden werden kann. Dieses Problem wird in besonders vorteilhafter Weise dadurch gelöst, daß am Außenumfang des durchlaufenden, metallischen Röhrchens mindestens eine Rolle abrollt, die als fester Kühlkörper ausgebildet ist.

Dadurch ist es in vorteilhafter Weise ermöglicht, das metallische Röhrchen beim Schweißvorgang in präzise kontrollierbarer Weise zu führen und zugleich eine Überhitzung des Röhrchens und damit des in ihn jeweilig eingebrachten Lichtwellenleiters und/oder Füllmasse in zuverlässiger Weise zu vermeiden. Weiterhin sind beim Abrollen einer solchen Rolle an der Außenwand des Röhrchens die dort wirksam werdenden Reibungskräfte weitaus geringer als bei der Kontaktierung der Außenwand mit lediglich einem starren, ortsfesten, d.h. unbeweglich aufgehängten Kühlkörper.

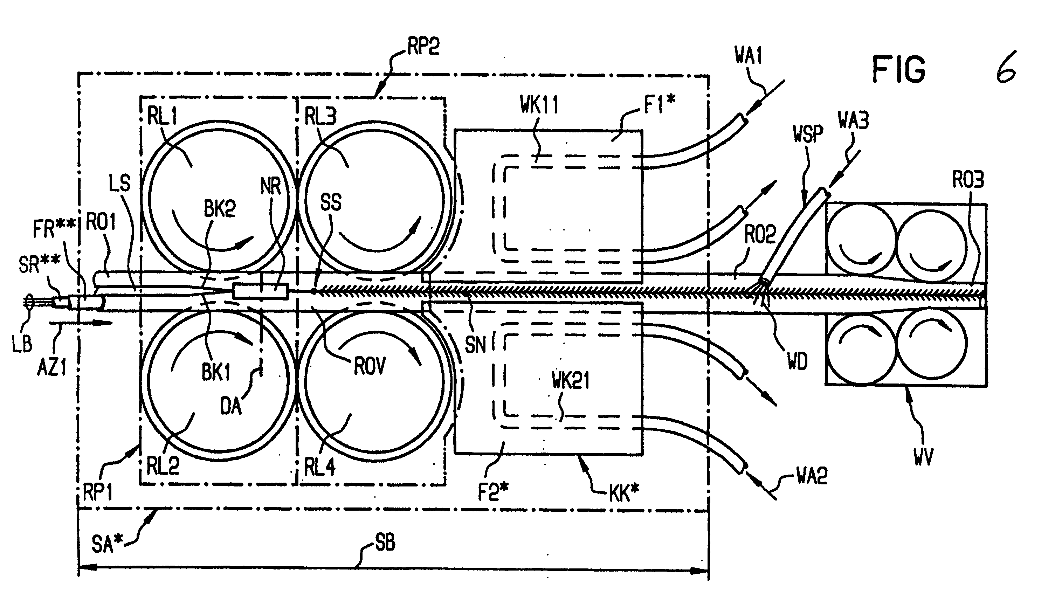

Figur 6 veranschaulicht in Draufsicht eine Schweißanordnung SA* im Detail. In Abzugsrichtung AZ1 betrachtet wird das Längsschlitzröhrchen RO1 in der Eingangszone des Schweißbereichs SB zwischen mindestens zwei einander zugeordneten Rollen bzw. Laufräder RL1, RL2 hindurchgeführt. Die beiden Rollen RL1, RL2 sind dabei beidseitig der Längserstreckung des durchlaufenden Röhrchens RO1 angeordnet und stehen sich insbesondere möglichst genau um 180° versetzt korrespondierend gegenüber. Sie sind vorzugsweise drehbar aufgehängt und werden insbesondere vom geradlinig durchlaufenden Röhrchen RO1 in Rotation versetzt. Insbesondere sind sie derart aufgehängt, daß ihre Drehbewegung in einer im wesentlichen waagrechten Ebene erfolgen kann, d.h. ihre Achsen stehen senkrecht zur Zeichenebene von Figur 6. Sie rollen am Außenumfang des durch sie hindurchlaufenden Längsschlitzröhrchens RO1 beidseitig dessen Längsschlitzes LS ab und drücken dabei die beiden Bandkanten BK1, BK2 des Röhrchens RO1 zusammen, so daß diese möglichst Stoß an Stoß gesetzt sind und der Längsschlitz LS weitgehend verschwindet. Um zugleich auch dem im wesentlichen kreiszylinderförmig ausgebildeten Längsschlitzröhrchen RO1 für den eigentlichen Schweißvorgang selbst eine definierte Querschnittsform aufprägen bzw. aufzwingen zu können, bilden die beiden, bezüglich der geradlinigen Längserstreckung des Röhrchens RO1 einander queraxial, insbesondere senkrecht zugeordneten Rollen RL1, RL2 ein Rollenpaar RP2, das eine Durchgangsöffnung vorgebbaren Querschnitts für das durchlaufende Röhrchen RO1 aufweist. Zur Umformung des Röhrchens RO1 sind am Außenumfang der beiden Laufräder bzw. Rollen RL1, RL2, d.h. in deren Laufflächen entsprechend profilierte Laufrillen bzw. Nuten eingelassen. Die Innenkontur der jeweiligen Laufrille entspricht dabei vorzugsweise der gewünschten Außenkontur desjenigen Außenumfangabschnitts des Röhrchens RO1, der der jeweiligen Rolle RL1, RL2 zugeordnet ist. Insbesondere ist jede Rolle RL1, RL2 annäherungsweise einer Teilhälfte des Außenumfangs des Röhrchens RO1 beidseitig dessen Längsschlitzes LS zugeordnet. Der Bereich um den Längsschlitz LS1 in Abzugsrichtung AZ1 gesehen bleibt dabei frei zugänglich, um anschließend die beiden Bandkanten BK1, Bk2 verschweißen zu können. Die Profilgebung der Lauffläche der jeweiligen Laufrolle RL1, RL2 ist in der Figur 6 zur besseren Veranschaulichung jeweils schematisch mit Hilfe zweier konzentrischer Kreise angedeutet.

Figur 8 zeigt bei Blickrichtung in Abzugsrichtung AZ1 schematisch im Querschnitt das metallische Röhrchen beim durchführen zwischen den beiden Rollen RL1, RL2 von Figur 6. Die beiden Rollen RL1, RL2 sind dabei in der Figur 8 strichpunktiert angedeutet. Zusätzlich ist in der Figur 8 eine gedachte Verbindungsgerade VL1 strichpunktiert eingezeichnet, die durch die Mitte des Stoßbereiches der beiden Bandkanten BK1, BK2 auf der Oberseite des Röhrchens und durch eine dazu um etwa 180° am Außenumfang des Röhrchens versetzten Stelle, d.h. auf der Unterseite des Röhrchens verläuft. Beidseitig dieser in der Figur 8 vertikal durch das Zentral ZA des Röhrchens gehenden - gedachten Symmetrie- bzw. Verbindungsgeraden VL1 sind die beiden Rollen RL1, RL2 jeweils einer Teilhälfte des Außenumfangs des Röhrchens zugeordnet. Sie sind derartig gegenüberliegend am Außenumfang des durchlaufenden Röhrchens angeordnet, daß die gedachte, strichpunktiert eingezeichnete Verbindungsgerade VL2 der Mitten ihrer Ausnehmungen IK1, IK2 senkrecht zur gedachten Verbindungsgeraden VL1 im Querschnittsbild von Figur 8 verläuft. Während der Stoßbereich der Bandkanten BK1, BK2 in etwa der 12-Uhr-Position am Außenumfang des Röhrchens zugeordnet ist, d.h. obenauf liegt, sind die Mitten der Außnehmungen IK1, IK2 um etwa 90° dazu versetzt. Die Innenkonturen der Ausnehmungen IK1, IK2 sind jeweils vorzugsweise derart ins Innere der zugehörigen Rollen RL1, RL2 hineingewölbt, daß das Rollenpaaar RP1 eine Durchgangsöffnung vorgebbaren Querschnitts, insbesondere ellipsen bzw. hochovalen Querschnitts für das durchlaufende Röhrchen vorgibt. Dabei verbleibt zwischen den beiden Rollen RL1, RL2 sowohl auf der Oberseite als auch auf der Unterseite des Röhrchens ein sich entlang der gedachten Verbindungslinie VL1 erstreckender Längsspalt SP1 bzw. SP2. Entlang dem Längsspalt SP1 bleiben die beiden miteinander zu verschweißenden Bandkanten BK1, BK2 für den Schweißvorgang nach außen frei zugänglich. Wird das zunächst im wesentlichen kreiszylinderförmige Röhrchen RO1 in den Durchgang zwischen den beiden Rollen RL1, RL2 eingeführt, so üben die beiden Rollen RL1, RL2 eine Druckkraft queraxial bezüglich der Längserstreckung des in Abzugsrichtung AZ1 durchlaufenden Röhrchens auf dessen Außenwände aus. Die Querdruckpressung erfolgt dabei insbesondere in einer Ebene, die etwa senkrecht zur Längserstreckung des Röhrchens RO1 liegt und deren Vorzugsrichtung (im Querschnittsbild von Figur 8 betrachtet) insbesondere durch das Zentrum ZA des Röhrchens RO1 sowie im wesentlichen parallel zur gedachten Verbindungslinie der sich gegenüberstehenden Bandkanten BK1, BK2 geht, d.h. etwa parallel zu derjenigen Tangente, die etwa durch die Stoßstelle in der Mitte zwischen den beiden Bandkanten BK1, BK2 am Außenumfang des Röhrchens RO1 verläuft. Im Querschnittsbild von Figur 8 ist diese Vorzugsrichtung für die Querdruckkräfte mit Hilfe der strichpunktierten Geradenlinie VL2 angedeutet, die dort im wesentlichen waagrecht eingezeichnet ist. Durch die Querdruckpressung wird ein solcher Rohrfügespaltdruck für das Längsschlitzröhrchen RO1 erzeugt, das dessen einander gegenüberstehenden Bandkanten BK1, BK2 zusammengedrückt werden, so daß sie möglichst bündig aneinander stoßen und der Längsschlitz LS geschlossen wird. Mit anderen Worten heißt das, daß das Längsschlitzröhrchen mit einer Kraftvorzugsrichtung entlang der gedachten Verbindungslinie VL2 zusammmengepreßt wird, was durch die entgegengesetzt zueinander gerichteten Pfeile QD1, QD2 angedeutet ist. Da die beiden Rollen RL1, RL2 die beiden Teilhäften des Röhrchens beidseitig der Symmetrielinie VL1 zusammenquetschen bzw. zusammenstauchen, ergibt sich eine hochovale, längliche Querschnittsform für das Röhrchen. Diese ist in der Figur 8 mit ROV bezeichnet. Da die beiden Rollen RL1, RL2 die beiden Teilhäften des Außenumfangs des Röhrchens beidseitig des Längsschlitzes LS zusammenpressen, wird das Röhrchen beiseitig der gedachten Verbindungslinie VL1 zusammengequetscht bzw. zusammengestaucht, so daß sich eine längliche Querschnittsform für das Röhrchen ergibt, d.h. die beiden Rollen RL1, RL2 wirken zugleich auch als Formblöcke. Diese bewirken durch Querdruckpressung eine plastische Verformung des Röhrchens derart, daß es eine größere Erstreckung entlang der gedachten Verbindungslinie VL1 als entlang der gedachten Verbindungslinie VL2 aufweist, d.h. mit anderen Worten, daß das Röhrchen höher als breit verformt wird. Nach der Querdruckpressung liegen die beiden Rollen RL1, RL2 mit ihren Laufrillen bzw. Ausnehmungen IK1, IK2 im wesentlichen formschlüssig am Außenumfang des durchlaufenden Röhrchens an.

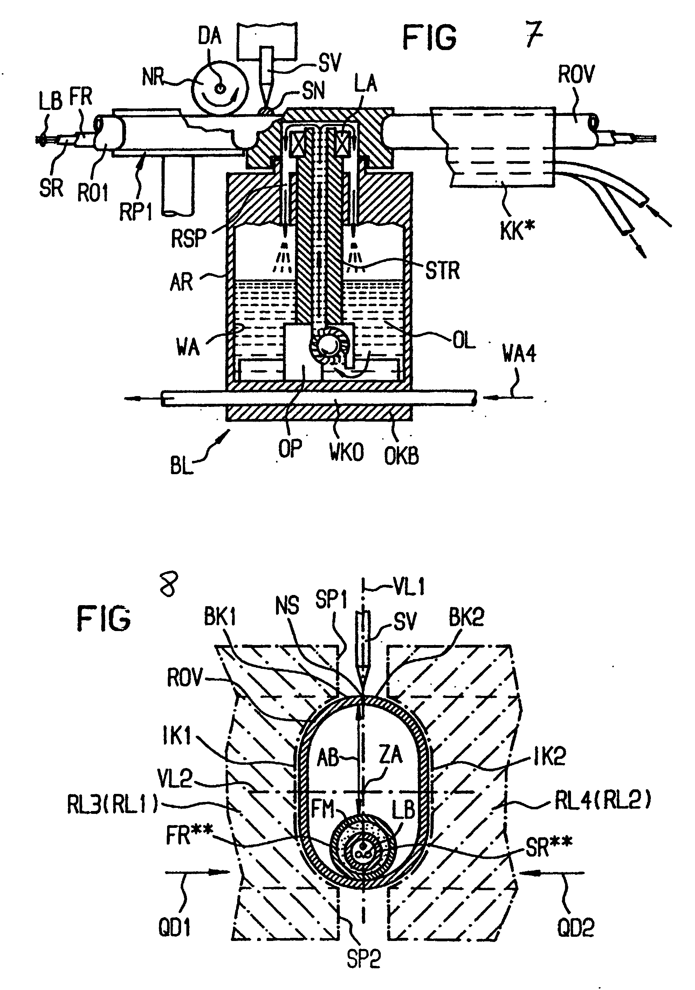

Nachdem das ursprünglich etwa kreiszylinderförmige Längsschlitzröhrchen RO1 von Figur 6 mit Hilfe des Rollenpaares RP1 hochovalförmig umgeformt und seine Bandkanten BK1, BK2 Stoß an Stoß gesetzt worden sind, wird das Röhrchen anschließend noch vor der eigentlichen Schweißstelle SS des Schweißbereichs SB im Bereich seiner Bandkanten BK1, BK2 plan gedrückt. Dazu ist eine Höhennormierungsrolle NR als Umformmittel vorgesehen. Diese Höhennormierungsrolle ist vorzugsweise in Abzugsrichtung AZ1 drehbar aufgehängt. Dazu erstreckt sich ihre Drehachse DA im Draufsichtsbild von Figur 6 im wesentlichen senkrecht zur Längserstreckung des in Abzugsrichtung AZ1 durchlaufenden Röhrchens RO1. Sie wird vom geradlinig durchlaufenden Röhrchen in Rotation versetzt. Dabei drückt sie von oben auf die Bandkanten BK1, BK2 derart, daß die Bandkanten BK1, BK2 des durchlaufenden Röhrchens RO1 platt, d.h. flachgedrückt werden und somit in einer gemeinsamen planen Lageebene zu liegen kommen. Diese Lageebene liegt insbesondere parallel zu derjenigen Tangente, die etwa durch die Stoßstelle in der Mitte zwischen den beiden Bandkanten BK1, BK2 am Außenumfang des ursprünglich kreiszylinderförmigen Röhrchens RO1 verläuft. Mit anderen Worten heißt das, daß sich diese Lageebene der plattgedrückten Bandkanten BK1, BK2 im wesentlichen parallel zur gedachten, in der Figur 8 waagrecht verlaufenden Verbindungsgeraden VL2 erstreckt. Auf diese Weise wird den beiden, Stoß an Stoß gesetzten, d.h. sich weitgehend berührenden Bandkanten BK1, BK2 eine definierten Lageebene zugewiesen. Auf diese Weise ist es ermöglicht, die beiden Bandkanten BK1, BK2 in einem exakten, radialen Abstand bezogen auf die Zentralachse des Röhrchens unter der nachfolgenden Schweißvorrichtung SV, insbesondere einem Laser, der Schweißanordnung SA* hindurchzuführen. Dies ist in der Figur 7 schematisch im Längsschnitt veranschaulicht. Mit Hilfe der Schweißvorrichtung SV werden die Bandkanten BK1, BK2 an der eigentlichen Schweißstelle SS verschmolzen. Dies zeigt nochmals die Figur 8 schematisch im Querschnitt. Die beiden Bandkanten BK1, BK2 des hochoval geformten Röhrchens ROV liegen in einer gemeinsamen, planflächigen Lageebene Stoß an Stoß, d.h. sie sind bündig aneinandergesetzt und berühren sich möglichst. Das hochovalförmige Röhrchen ROV weist also im Bereich seiner Bandkanten BK1, BK2 eine planflächige Eindellung auf, die durch die Normierungsrolle NR zuvor bewirkt worden ist. Auf diese Weise kann erreicht werden, daß in radialer Richtung bezogen auf die Zentralachse ZA des Röhrchens ROV betrachtet zwischen der Stoßlinie der beiden Bandkanten BK1, BK2 und der Schweißvorrichtung SV ein definierter Abstand eingehalten werden kann. Dies erlaubt eine Verschweißung der Bandkanten BK1, BK2 in besonders präzise kontrollierbarer Weise. Dadurch, daß dabei die im wesentlichen geradlinig verlaufende Stoßlinie zwischen den beiden Bandkanten BK1, BK2 beim Hindurchführen durch die Schweißanordnung SA* von Figur 6 obenauf, d.h. auf der Oberseite des Röhrchens ROV und zudem in einer planflächigen, insbesondere im wesentlichen waagrecht verlaufenden Ebene liegt, ist weitgehend vermieden, daß das aufgeschmolzene Metall, d.h. das flüssige Schmelzbad der Bandkanten BK1, BK2 an der Schweißstelle SS (vgl. Figur 6) am Außenumfang des Röhrchens ROV herablaufen kann. Auf diese Weise sind Materialverluste im Bereich der Bandkanten und eine daraus resultierende unzulässige Wandstärkenverminderung entlang der Schweißnaht SN weitgehend vermieden.

Gegebenenfalls kann es zweckmäßig sein, zusätzlich oder unabhängig von dem Rollenpaar RP1 bzw. etwaig mehreren Rollenpaaren vor der eigentlichen Schweißstelle SS (bei Blickrichtung in Durchlaufrichtung AZ1) auch hinter der Schweißstelle mindestens ein analog ausgebildetes Rollenpaar anzuordnen. In der Figur 6 wird das hochovale Röhrchen ROV nach dem Verschweißen an der Schweißstelle SS in Abzugsrichtung AZ1 betrachtet durch das weitere Rollenpaar RP2 hindurchgeführt. Dessen Rollen RL3, RL4 sind vorzugsweise entsprechend dem Rollenpaar RP1 angeordnet und ausgebildet. Das Rollenpaar RP1 vor sowie das Rollenpaar RP2 unmittelbar nach der eigentlichen Schweißstelle SS dienen insbesondere dazu, ein Auffedern, d.h. Auseinanderbewegen der Bandkanten des hochovalförmigen Röhrchens ROV zu verhindern, solange das flüssige Schnelzbad der Schweißnaht SN noch nicht erstarrt, d.h. abgekühlt und ausgehärtet ist. Dazu wird beidseitig der geradlinig in Abzugsrichtung AZ1 verlaufenden Stoßlinie der beiden Bandkanten eine Querdruckkraft auf diese ausgeübt. Die Stoß an Stoß gesetzten Bandkanten können durch diese seitliche Führung bis zum Erstarren des flüssigen Schmelzbades der Schweißnaht SN, d.h. bis zum Ausbilden einer festen mechanischen Verbindung zwischen den Bandkanten nicht mehr auseinanderwandern. Zwischen den beiden Rollen RL3, RL4 verbleibt die Schweißnaht SN nach außen hin frei zugänglich. Dadurch wird in vorteilhafter Weise weitgehend vermieden, daß das flüssige Schmelzbad der Schweißnaht SN beim Hindurchlaufen durch die Schweißanordnung SA* abgerieben oder in sonstiger unzulässiger Weise gestört oder gar beschädigt wird. Das verschweißte Röhrchen ROV kommt also mit seiner Schweißnaht SN selbst nicht mit den beiden Rollen RL3, RL4 in Berührung. Das flüssige Schmelzbad der Schweißnaht SN kann dadurch weitgehend unbeeinflußt erstarren.

Weiterhin kann es gegebenenfalls zweckmäßig sein, vor und/oder nach der eigentlichen Schweißstelle mehr als ein Rollenpaar, d.h. mehrere Rollenpaare, entsprechend RP1 bzw. RP2 vorzusehen.

Um eine Überhitzung der im Stützröhrchen SR** geführten Lichtwellenleiter sowie der Füllmasse FM im Füllröhrchen FR** weitgehend zu vermeiden, sind die beiden Rollen RL3, RL4 des Rollenpaares RP2 gleichzeitig auch als Kühlkörper ausgebildet. Analog dazu können auch die beiden Rollen RL1, RL2 des ersten Rollenpaares RP1 bereits vor der eigentlichen Spleißstelle SS eine Kühlfunktion mit übernehmen. Die jeweilige Rolle wird von innen her gekühlt. Dies veranschaulicht das Längsschnittbild von Figur 7 beispielhaft für die Rolle RL4. Sie ist mittels eines Lagers LA an einem feststehenden, längsortfesten Lagerbock BL derart aufgehängt, daß sie in einer Ebene senkrecht zur Zeichenebene von Figur 7 drehbar ist, d.h. in einer bezogen auf den Standboden der Schweißanordnung SA* von Figur 6 waagrechten Lageebene. Im Inneren dieses Lagerbockes BL wird ein Kühlmittel OL, insbesondere Öl, mit Hilfe einer Pumpe OP durch ein zentrales Standrohr bzw. eine Achse STR nach oben' hin zum Lager LA, insbesondere Nadellagern, gedrückt. Dieses Lager LA ist am freien Ende des Standrohres STR angebracht. Das Kühlmittel OL tritt am ausgangseitigen Rohrende aus und wird über einen Ringspaltkanal RSP zwischen dem zentralen Standrohr STR und dem Außenrohr bzw. Außenwand AR des Lagerbockes BL zu einem Auffangbecken bzw. einer Auffangwanne WA zurückgeführt, das mit der Pumpe OP in Verbindung steht. Das Außenrohr AR des Lagerbockes BL ist umgibt also das zentrale Standrohr STR, so daß ein geschlossenes Kühlmittelsystem gebildet ist. Dadurch, daß das Kühlmittel OL unmittelbar über die Lager LA im Ringspaltkanal RSP hinweggeleitet wird, übernimmt es im selben Kühlkreislauf gleichzeitig auch noch eine Schmierfunktion für diese Lager LA. Vorzugsweise wird deshalb als Kühlmittel ein Öl, insbesondere ein Wärmeträgeröl verwendet. Das Kühlmittel OL selbst wird in seiner Wanne WA dadurch gekühlt, daß durch seinen Wannenboden OKB Kühlkanäle WKO hindurchgeführt sind, durch die ein Kühlmittel wie z.B. Wasser WA4 hindurchläuft.

Zusammenfassend betrachtet läßt sich also die Schmelzwärme in der unmittelbaren Umgebung der eigentlichen Schweißstelle SS dadurch besonders schnell vom Röhrchen abführen, daß ein gekühlter Pestkörper beidseitig der Schweißnaht SN am Außenumfang des Röhrchens ROV anliegt. Dadurch kann die Schmelzwärme von den Lichtwellenleitern und der sie umschließenden Füllmasse weitgehend ferngehalten werden. Dazu trägt auch die Doppelanordnung der beiden Schutzröhrchen SR**, FR** bei, in denen jeweils separat voneinander die Lichtwellenleiter sowie die Füllmasse unter der Schweißanordnung hinweggeführt wird. Weiterhin verhilft die hochovale Formgebung des Röhrchens ROV dazu, daß ein möglichst großer Abstand AB (vgl. Figur (8) zwischen der Schweißnaht SN und dem Schutzrohrsystem bereitgestellt werden kann. Die Doppelanordnung der beiden Röhrchen SR**, FR** wird dabei zweckmäßigerweise möglichst auf der der Schweißnaht SN gegenüberliegenden Innenseite des metallischen Röhrchens ROV entlanggeführt. Weiterhin ist es zweckmäßig das Röhrchen RO1 mit einem möglichst großen Durchmesser vorzuformen.

Zweckmäßigerweise wird für das Röhrchen RO1 ein Außendurchmesser zwischen 3 und 12 mm, insbesondere zwischen 4 und 10 mm, gewählt. Vorzugsweise weist es einen Innendurchmesser zwischen 2,5 und 10 mm, bevorzugt zwischen 3,6. und 8 mm auf.

Dadurch, daß als gekühlter Festkörper mindestens eine Rolle, insbesondere ein Rollenpaar verwendet ist, sind zudem in vorteilhafter Weise unzulässig hohe Reibungskräfte zwischen dem metallischen Röhrchen und den Kontaktierungsflächen der Rollen weitgehend vermieden. Dadurch ist einem Rupfen am Röhrchen oder gar einem Steckenbleiben, d.h. "Festfressen" des Röhrchens weitgehend entgegengewirkt.

Um ein Steckenbleiben des Röhrchens im jeweiligen Rollenpaar zu vermeiden, kann es insbesondere zweckmäßig sein, der jeweiligen Rolle eine Antriebseinrichtung, insbesondere einen Motor zuzuordnen, so daß das Röhrchen zwischen jeweils zwei Rollen aktiv in Abzugsrichtung AZ1 vorwärts geschoben werden kann.

Zusätzlich oder unabhängig von den Rollenpaaren RP1, RP2 von Figur 6 kann es ggf. zweckmäßig sein, dem Rollenpaar RP2 schließlich mindestens einen weiteren gekühlten Festkörper in der ausgangsseitigen Zone des Schweißbereichs SB nachzuordnen, der im Unterschied zu den Laufrollen der Rollenpaare RP1, RP2 raumortsfest angebracht, d.h. unbeweglich und nicht drehbar (wie die Rollen RL1/RL2, RL3/RL4) aufgehängt ist. Ein solcher gekühlter Festkörper ist in der Figur 6 dem Rollenpaar RP2 nachgeordnet und mit KK* bezeichnet. Er ist durch zwei separate, feststehende Kühlblöcke F1*, F2* gebildet, die das in Abzugsrichtung AZ1 durchlaufende Röhrchen ROV von außen zwischen ihren Längsseiten zwingenartig einschixeßen. Der gekühlte Festkörper KK* ist vorzugsweise entsprechend dem Kühlkörper KK der Figuren 4,5 ausgebildet. Seine beiden Kühlblöcke F1*, F2* weisen annäherungsweise eine quaderförmige Gestalt auf. Zwischen diesen beiden feststehenden Kühlblöcken F1*, F2* ist eine Längsdurchführung bzw. Durchgangsöffnung vorgebbaren Querschnitts für das durchlaufende Röhrchen ROV vorgesehen. Das Querschnittsprofil dieser Durchgangsöffnung entspricht vorzugsweise der gewünschten Außenkontur des hochoval geformten Röhrchens ROV. Die beiden Kühlblöcke F1*, F2* drücken queraxial auf das Röhrchen ROV, so daß sich ihre Innenwände satt an die Außenoberfläche des Röhrchens ROV anlegen und dessen Rohrwand abkühlen. Auf der Oberseite des Kühlkörpers KK* ist zwischen seinen beiden Kühlblöcken F1*, F2* ebenfalls ein im wesentlichen geradlinig verlaufender Längsspalt bzw. Längsschlitz freigehalten, der sich über die gesamte Länge des Kühlkörpers KK* hinweg erstreckt. Entlang diesem Längsspalt bleibt die Schweißnaht SN frei zugänglich und kann somit ohne Beeinträchtigungen erstarren. Auf diese Weise wird das Schmelzbad der Schweißnaht SN beim Hindurchziehen durch die Schweißanordnung SA* zumindest bis zu seinem Erstarren weder mit einer Kühlflüssigkeit noch in sonstiger Weise kontaktiert. Der jeweilige Kühlkörper wie z.B. die Rollen RL3, RL4 sowie die Kühlblöcke F1*, F2* liegen lediglich mit einer trockenen Kontaktierungsfläche an der Röhrchenaußenwand an, d.h. das Röhrchen wird vorzugsweise im trockenen Zustand durch den jeweiligen Kühlkörper RP2 bzw. KK* hindurchgezogen. Auf diese Weise wird eine Materialversprödung oder Oxidbildung entlang der gebildeten Schweißnaht SN weitgehend vermieden. Würde demgegenüber vor, an und/oder nach der eigentlichen Schweißstelle SN mit einem flüssigen Kühlmittel wie z.B. Wasser gekühlt werden, so käme es üblicherweise zu einer unerwünschten Materialversprödung oder sonstigen Schädigung der Schweißnaht SN. Da die Schweißnaht SN zumindest bis zu ihrem Erstarren im wesentlichen berührungslos durch die Schweißanordnung SA* hindurchgeführt wird, ist eine Störung des flüssigen Schmelzbades sowie ein sonstiger unzulässiger Materialabrieb der noch weichen Schweißnaht weitgehend vermieden.

In die beiden Kühlblöcke F1*, F2* sind jeweils Kanäle WK11, WK21 eingelassen, durch die ein Kühlmittel wie z.B. Wasser hindurchgeführt ist. Der jeweilige Kühlblock F1*, F2* ist vorzugsweise massiv ausgebildet und weist jeweils annäherungsweise eine quaderförmige Gestalt auf.

Die beiden Kühlblöcke F1*, F2* umfassen im Querschnitt betrachtet das hochoval geformte Röhrchen ROV entsprechend den beiden Rollen RL1, RL2 von Figur 8. Sie kontaktieren mindestens 60%, insbesondere zwischen 5 und 20 % bevorzugt etwa 10 % des Außenumfangs des durchlaufenden metallischen Röhrchens ROV.

Gleichzeitig pressen die beiden feststehenden Kühlblöcke F1*, F2* das Röhrchen ROV weiterhin auf seinem Transportweg von der eigentlichen Schweißstelle SS weg zusammen, so daß ein Auf federn der Bandkanten solange vermieden ist, bis das flüssige Schmelzbad der Schweißnaht erstarrt, d.h. weitgehend abgekühlt ist. Durch die beiden Kühlblöcke F1*, F2* werden also die beiden Bandkanten BK1, BK2 solange zusammengedrückt gehalten, bis eine feste mechanische Verbindung zwischen diesen hergestellt ist.

Insgesamt betrachtet, wird also vor, an der Schweißstelle selbst und/oder nach der eigentlichen Schweißstelle jeweils mindestens ein gekühlter Festkörper in Kontakt mit dem durchlaufenden Röhrchen gebracht, um dieses schnellstmöglich abzukühlen. Das Schmelzbad der Schweißnaht bleibt dabei selbst unberührt, so daß die Schweißnaht weitgehend unbeeinflußt erstarren kann. Durch diese Art der Kühlung kann somit sichergestellt werden, daß es zu keiner Überhitzung oder sonstigen thermischen Überbeanspruchung der Lichtwellenleiter und/oder der Füllmasse im Inneren des metallischen Röhrchens im Bereich der Schweißstelle kommt.

Gegenüber den feststehend angeordneten, unbeweglichen Kühlkörper KK* von Figur 6, zeichnen sich die Rollen RL3, RL4 des Rollenpaares RP2 vorzugsweise dadurch aus, daß sie frei drehbar gelagert sind und vom durchlaufenden Röhrchen in Abzugsrichtung AZ1 rotierend mitgenommen werden. Dies bietet die Vorteile verminderter Reibung auf der Außenoberfläche des durchlaufenden Röhrchens sowie dessen genauere Führung und Formung.

Zweckmäßigerweise ist für die gekühlten Festkörper, wie z.B. die Rollen RL3, RL4 sowie die Kühlblöcke F1*, F2* ein Material mit besonders hoher Wärmeleitfähigkeit, wie z.B. ein metallischer Werkstoff, insbesondere Aluminiumbronze, Kupferbronze oder Stahl gewählt. Zweckmäßigerweise ist für den jeweiligen Kühlkörper ein Material verwendet, das eine hohe Trockengleiteigenschaft aufweist, d.h. besonders reibungsarm ist, so daß ein Rupfen am Röhrchen oder gar ein Festfressen, d.h. Steckenbleiben des Röhrchens beim Hindurchziehen durch den jeweiligen Kühlkörper weitgehend vermieden ist.

Besonders zweckmäßig ist es, beidseitig der zu bildenden Schweißnaht einander korrespondierende Kühlkörper vorzusehen, die zwischen sich einen freibleibenden Längsdurchlauf vorgebbarer Querschnittsform aufweisen. Dadurch ist es zusätzlich ermöglicht, dem Röhrchen eine gewünschte Querschnittsform aufzuzwingen und zugleich das Röhrchen in definierter Weise zu führen. Das Röhrchen kann auf diese Weise entlang einer im wesentlichen geradlinigen Bahn entlang dem Schweißbereich SB entlanggeführt werden. Seitliche Auslenkungen, insbesondere radiale Ablenkungen bezogen auf die Zentralachse des Röhrchens sind dadurch während des Schweißprozesses in der Schweißanordnung SA* weitgehend vermieden. Auf diese Weise ist entlang des Schweißbereich SB eine sehr genaue Röhrchenführung ermöglicht. Dadurch kann sich die Schweißnaht SN weitgehend ungestört, insbesondere im wesentlichen geradlinig entlang der Stoßlinie der beiden Bandkanten BK1, BK2 des Röhrchens ausbilden. Insbesondere ist weitgehend vermieden, daß es zu einem Verlaufen des aufgeschmolzenen Metalls im Bereich der Bandkanten BK1, BK2 kommt, denn das Röhrchen wird entlang der Schweißnaht durch den gesamten Schweißbereich SWB der Schweißanordnung SA* im wesentlichen berührungslos hindurchgeführt.

Auf diese Weise läßt sich mit Hilfe der Schweißanordnung SA* von Figur 6 insbesondere eine im wesentlichen strichförmige Schweißnaht erzeugen, die sich im wesentlichen geradlinig über die Länge des fertigen Röhrchens hinweg erstreckt. Dabei ist weitgehend vermieden, daß die Schweißnaht zu dünn wird oder es gar zu einem Durchbrennen der Bandkanten bzw. der Schweißnaht (Löcher !) kommen kann.

Die vorteilhafte Schweißanordnung SA* nach Figur 6 kann dabei in allen möglichen Varianten von Herstellungslinien zum Einsatz kommen, mit denen mit Lichtwellenleitern bestückte metallische Röhrchen gefertigt werden.

Der Schweißbereich SB erstreckt sich vorzugsweise entlang einer Strecke zwischen 50 und 200 mm, insbesondere zwischen 100 und 150 mm. Die Rollen weisen vorzugsweise jeweils einen Außendurchmesser zwischen 30 und 80 mm, bevorzugt zwischen 30 und 50 mm auf. Die Rollenpaare RP1 sowie RP2 folgen vorzugswiese in einem Abstand zwischen 40 und 90 mm, insbesondere zwischen 40 und 60 mm aufeinander. Die Höhennormierungsrolle NR ist in Abzugsrichtung AZ1 betrachtet dem Rollenpaar RP1 zwischen 5 und 30 mm, insbesondere zwischen 10 und 20 mm versetzt nachgeordnet. Die eigentliche Schweißstelle SS weist einen Abstand zwischen 15 und 60 mm, insbesondere zwischen 20 und 40 mm zum zugehörigen Längsort des ersten Rollenpaares RP1 auf. Die Kühlblöcke F1*, F2* weisen vorzugsweise eine Längserstreckung zwischen 30 und 100 mm, insbesondere zwischen 40 und 60 mm auf.

Die Spaltbreite zwischen den beiden Rollen RL1, RL2 sowie RL3, RL4 in queraxialer Richtung betrachtet ist vorzugsweise zwischen 1 und 6 mm, insbesondere zwischen 1 und 4 mm gewählt. Die Spaltbreite zwischen den beiden Kühlblöcken F1*, F2* in queraxialer Richtung betrachtet ist vorzugsweise zwischen 1 und 6 mm, insbesondere zwischen 1 und 4 mm gewählt.

Nach dem Erstarren des Schmelzbades der Schweißnaht SN kann es ggf. zweckmäßig sein, die noch glühend heiße Schweißnaht SN nach Verlassen des Kühlkörpers KK* zusätzlich mit einem flüssigen Kühlmittel, insbesondere Wassertröpfchen zu bespritzen. Dazu ist der Schweißanordnung SA* von Figur 6 eine Kühlvorrichtung WSP nachgeordnet. Sie dient insbesondere dem Benetzen bzw. Besprühen der bereits erstarrten Schweißnaht SN mit einer Kühlmittelflüssigkeit, insbesondere mit mikroskopisch kleinen Wassertröpfchen. Erst nach dem Erstarren des Schmelzbades der Schweißnaht SN wird diese also selbst soweit abgekühlt, daß die Außenoberfläche der Schweißnaht SN Anlauffarben bildet. Dadurch ist in vorteilhafter Weise einer Oxidschichtbildung auf der Schweißnaht entgegengewirkt. Schließlich wird das hochoval geformte Röhrchen ROV durch eine nachfolgende Formvorrichtung, insbesondere eine Walz- und/oder Zieheinrichtung, hindurchtransportiert und ihm seine Endform gegeben. Vorzugsweise wird das ovalförmige Röhrchen ROV zu einem kreiszylinderförmigen Röhrchen umgeformt, daß gegenüber seiner ovalförmigen Querschnittsform im Durchmesser reduziert ist. Die Walzvorrichtung WV entspricht dabei vorzugsweise der Walzvorrichtung entsprechend der Figur 1.

Das fertige optische Übertragungselement OE weist einen Außendurchmesser vorzugsweise zwischen 0,5 und 10 mm, insbesondere zwischen 1,5 und 8 mm, auf. Sein Innendurchmesser liegt vorzugsweise zwischen 0,3 und 9 mm, insbesondere zwischen 1,3 und 7 mm.

## Patentansprüche

1. Vorrichtung zur Herstellung eines metallischen Röhrchens (ROV), in das mindestens ein Lichtwellenleiter (LB) einbringbar ist, mit einer Formvorrichtung (FS, RP1), die ein langgestrecktes Metallband (MB) zu dem Röhrchen (ROV) umformt, sowie einer Schweißvorrichtung (SV), die die beiden Bandkanten (BK1, BK2) des Röhrchens (ROV) im Schweißbereich (SB) miteinander verschweißt,
**dadurch gekennzeichnet,**
**daß** im Schweißbereich (SB) mindestens ein gekühlter Festkörper (KK) vorgesehen ist, der das in Abzugsrichtung (AZ1) durchlaufende Röhrchen (RO1) außen zur Kühlung kontaktiert.

2. Vorrichtung nach Anspruch 1,
**dadurch gekennzeichnet,**
**daß** der gekühlte Festkörper (KK) am Röhrchen (RO1) mit einer trockenen Kontaktierungsfläche anliegt.

3. Vorrichtung nach einem der Ansprüche 1 oder 2,
**dadurch gekennzeichnet,**
**daß** zumindest im Schweißbereich (SB) im Inneren des Röhrchens. (RO1) Mittel (AB, FR, FM, SR*) zur thermischen Abschirmung des Lichtwellenleiters (LW1 mit LWn) vorgesehen sind.

4. Vorrichtung nach einem der Ansprüche 1 mit 3,
**dadurch gekennzeichnet,**
**daß** der gekühlte Festkörper (KK) durch mindestens zwei festehende Kühlblöcke (FB1, FB2) gebildet ist, die queraxial zur Längserstreckung des Röhrchens (RO1) zusammenpreßbar sind und das Röhrchen (RO1) zwischen sich einschließen.

5. Vorrichtung nach einem der Ansprüche 1 mit 3,
**dadurch gekennzeichnet,**
**daß** der gekühlte Festkörper (RP2) durch mindestens eine Rolle (RL3, RL4) gebildet ist, die am Außenumfang des durchlaufenden Röhrchens (ROV) abrollt.

6. Vorrichtung nach einem der Ansprüche 1 mit 5,
**dadurch gekennzeichnet,**
**daß** beidseitig der Schweißnaht (SN) des Röhrchens (ROV) Mittel (RP2, KK*) vorgesehen sind, die einem Auffedern der Bandkanten (BK1, BK2) des Röhrchens (ROV) bis zum Erstarren des Schmelzbades der Schweißnaht (SN) entgegenwirken.

7. Verfahren zur Herstellung eines metallischen Röhrchens (ROV), in das mindestens ein Lichtwellenleiter (LB) eingebracht wird, wobei das Röhrchen (ROV) aus einem langgestreckten Metallband (MB) vorgeformt wird und seine beiden Bandkanten (BK1, BK2) im Schweißbereich (SB) miteinander verschweißt werden,
**dadurch gekennzeichnet,**
**daß** das in Abzugsrichtung (AZ1) durchlaufende Röhrchen (RO1) im Schweißbereich (SB) außen von mindestens einem gekühlten Festkörper (KK) kontaktiert wird.

8. Verfahren nach Anspruch 7,
**dadurch gekennzeichnet,**
**daß** das Röhrchen (RO1) und der gekühlte Festkörper (KK) im trockenen Zustand kontaktiert werden.

9. Verfahren nach einem der Ansprüche 7 oder 8,
**dadurch gekennzeichnet,**
**daß** das Röhrchen (RO1) mit Hilfe des gekühlten Festkörpers (KK) zusätzlich in eine vorgegebene Querschnittsform umgeformt wird.

10. Verfahren nach einem der Ansprüche 7 mit 8,
**dadurch gekennzeichnet,**
**daß** das durchlaufende Röhrchen (ROV) an seinem Außenumfang von mindestens einer Rolle (RL3, RL4) als gekühlter Festkörper kontaktiert wird.

## Claims

1. Device for producing a metallic sheath (ROV), into which at least one optical fibre (LB) can be introduced, with a forming device (FS, RP1), which forms an elongated metal strip (MB) into the sheath (ROV), and also a welding device (SV), which welds the two strip edges (BK1, BK2) of the sheath (ROV) to each other in the welding region (SB), **characterized in that** in the welding region (SB) there is provided at least one cooled solid body (KK), which contacts the sheath (RO1) running through in the drawing-off direction (AZ1) on the outside for cooling purposes.

2. Device according to Claim 1, **characterized in that** the cooled solid body (KK) bears with a dry contacting surface against the sheath (RO1).

3. Device according to either of Claims 1 and 2, **characterized in that**, at least in the welding region (SB), means (AB, FR, FM, SR*) for thermally shielding the optical fibre (LW1 with LWn) are provided in the interior of the sheath (RO1).

4. Device according to one of Claims 1 to 3, **characterized in that** the cooled solid body (KK) is formed by at least two fixed cooling blocks (FB1, FB2), which can be pressed together cross-axially in relation to the longitudinal extent of the sheath (RO1) and enclose the sheath (RO1) between them.

5. Device according to one of Claims 1 to 3, **characterized in that** the cooled solid body (RP2) is formed by at least one roller (RL3, RL4) which rolls on the outer circumference of the sheath (ROV) running through.

6. Device according to one of Claims 1 to 5, **characterized in that** means (RP2, KK*) which counteract springing open of the strip edges (BK1, BK2) of the sheath (ROV) until the molten pool of the weld seam (SN) solidifies are provided on both sides of the weld seam (SN) of the sheath (ROV).

7. Process for producing a metallic sheath (ROV), into which at least one optical fibre (LB) is introduced, the sheath (ROV) being preformed from an elongated metal strip (MB) and its two strip edges (BK1, BK2) being welded to each other in the welding region (SB), **characterized in that** the sheath (RO1) running through in the drawing-off direction (AZ1) is contacted on the outside in the welding region (SB) by at least one cooled solid body (KK).

8. Process according to Claim 7, **characterized in that** the sheath (RO1) and the cooled solid body (KK) are contacted in the dry state.

9. Process according to either of Claims 7 and 8, **characterized in that** the sheath (RO1) is formed additionally into a predetermined cross-sectional shape with the aid of the cooled solid body (KK).

10. Process according to either of Claims 7 and 8, **characterized in that** the sheath (ROV) running through is contacted on its outer circumference by at least one roller (RL3, RL4) as the cooled solid body.

## Revendications

1. Dispositif de production d'un petit tube (ROV) métallique dans lequel peut être introduit au moins un guide d'ondes (LB) de lumière, comprenant un dispositif (FS, RP1) de formage qui transforme un feuillard (MB) métallique s'étendant en longueur en le petit tube (ROV), ainsi qu'un dispositif (SV) de soudage qui soude l'un à l'autre les deux bords (BK1, BK2) de feuillard du tube (ROV) dans la zone (SB) de soudure
**caractérisé**
**en ce qu'**il est prévu dans la zone (SB) de soudure au moins un corps (KK) solide refroidi qui vient en contact à l'extérieur pour le refroidissement avec le petit tube (RO1) passant dans le sens (AZ1) d'extraction.

2. Dispositif suivant la revendication 1, **caractérisé en ce que**
le corps (KK) solide refroidi s'applique au petit tube (RO1) par une surface sèche de mise en contact.

3. Dispositif suivant l'une des revendications 1 ou 2, **caractérisé**
**en ce qu'**il est prévu au moins dans la zone (SB) de soudure, à l'intérieur du petit tube (RO1), des moyens (AB, FR, FM, SR*) de protection thermique du guide d'ondes (LW1 à LWn) de lumière.

4. Dispositif suivant l'une des revendications 1 à 3, **caractérisé**
**en ce que** le corps (KK) solide, refroidi est formé d'au moins deux blocs (FB1, FB2) fixes de refroidissement, qui sont comprimés ensemble dans la direction axiale transversale par rapport à l'étendue longitudinale du petit tube (RO1) et qui enferment entre eux le petit tube (RO1).

5. Dispositif suivant l'une des revendications 1 à 3, **caractérisé**
**en ce que** le corps (RP2) solide refroidi est formé d'au moins un rouleau (RL3, RL4) qui roule sur le pourtour extérieur du petit tube (ROV) qui passe.

6. Dispositif suivant l'une des revendications 1 à 5, **caractérisé**
**en ce qu'**il est prévu de part et d'autre du cordon (SN) de soudure du petit tube (ROV) des moyens (RP2, KK*) qui s'opposent, jusqu'à la solidification du bain fondu du cordon (SN) de soudure, à une détente des bords (BK1, BK2) du feuillard.

7. Procédé de production d'un petit tube (ROV) métallique dans lequel au moins un guide d'ondes (LB) de lumière peut être introduit, le petit tube (ROV) étant préformé dans un feuillard (MB) métallique s'étendant en longueur et ses deux bords (BK1, BK2) de feuillard étant soudés l'un à l'autre dans la zone (SB) de soudure,
**caractérisé en ce que** l'on met le petit tube (RO1) passant dans le sens (AZ1) d'extraction en contact dans la zone (SB) de soudure à l'extérieur avec au moins un corps (KK) solide refroidi.

8. Procédé suivant la revendication 7, **caractérisé**
**en ce que** l'on met le petit tube (RO1) et le corps (KK) solide refroidi en contact à l'état sec.

9. Procédé suivant l'une des revendications 7 ou 8, **caractérisé**
**en ce que** l'on donne en plus une forme de section transversale prescrite au petit tube (RO1) à l'aide du corps (KK) solide refroidi.

10. Procédé suivant l'une des revendications 7 ou 8, **caractérisé**
**en ce que** l'on met le tube (ROV) qui passe en contact sur son pourtour extérieur avec au moins un rouleau (RL3, RL4) servant de corps solide refroidi.
